# EUROPEAN PATENT APPLICATION

(11) **EP 4 529 203 A1**
(43) Date of publication of application: **26.03.2025**
(21) Application number: 24745610.6
(22) Date of filing: 29.07.2024
(51) Int. Cl.: H04N 23/63, H04N 23/45, H04N 23/54, H04N 23/55, H04N 23/57, H04N 23/65, H04N 23/62, H04N 23/69, G03B 30/00, G03B 5/06

(54) **ELECTRONIC DEVICE COMPRISING CAMERA, AND OPERATING METHOD THEREFOR**

(30) Priority: 31.07.2023 KR 20230099500; 11.09.2023 KR 20230120410
(71) Applicant: Samsung Electronics Co., Ltd., Suwon-si, Gyeonggi-do 16677 (KR)
(72) Inventor: KIM, Sungmin, Suwon-si, Gyeonggi-do 16677 (KR); KIM, Haneung, Suwon-si, Gyeonggi-do 16677 (KR); PARK, Dongyoul, Suwon-si, Gyeonggi-do 16677 (KR); SHIN, Junseok, Suwon-si, Gyeonggi-do 16677 (KR); SHIM, Jaekyu, Suwon-si, Gyeonggi-do 16677 (KR); JUNG, Kioh, Suwon-si, Gyeonggi-do 16677 (KR)
(74) Representative: Nederlandsch Octrooibureau
(86) International application number: PCT/KR2024/011004
(87) International publication number: WO 2025/028969

(57) **Abstract**

According to an embodiment, an electronic device may include a display, a first camera including a first lens assembly and a first driving unit, a second camera including a second lens assembly and a second driving unit, and a processor, wherein the processor may be configured to display, based on a request for execution of a camera function, through the display, a preview image obtained using the second camera, and drive the first driving unit using a pulse width modulation (PWM) driving method to move the first camera and drive the second driving unit using a linear driving method to move the second camera during at least a portion of a time period in which the preview image is obtained through the second camera. Various other embodiments are possible.

## Description

### [Technical Field]

Embodiments of the disclosure relate to an electronic device including a camera, and a method of operating the same.

### [Background Art]

As technology of manufacturing digital cameras has developed, electronic devices equipped with smaller and lighter cameras have been commercialized. Cameras installed in electronic devices enable users to easily utilize various functions such as video calls or augmented reality, as well as take photos or videos.

The camera may perform an image stabilization function for image correction in response to disturbance. Here, the disturbance may indicate the occurrence of various artifacts, such as blurring of the image obtained through a camera module due to slight shaking of the user's hand when taking a photo or recording a video. The image stabilization function, for example, a shake (or hand-shake) correction function, may move the lens assembly included in the camera module on a plane perpendicular to the optical axis to compensate for limited movement of the electronic device due to the fixture or the user's grip, thereby preventing or alleviating shaking in the captured images or videos. To this end, the camera may include a coil and a magnet. The coil supplied with current may generate electromagnetic force through electromagnetic interaction with the magnet, and the camera may perform the shake correction function using the generated electromagnetic force. As a method of correcting shakes using electromagnetic force, various methods such as lens shift in which the lens assembly is moved, prism shift in which the prism is moved, and module tilt in which the camera is tilted may be applied.

The foregoing information may be provided as background to aid understanding of the disclosure. No claim or determination is made as to whether any of the foregoing may be applied as prior art related to the disclosure.

### [Technical Solution]

According to an embodiment, an electronic device may include a display, a first camera including a first lens assembly and a first driving unit, a second camera including a second lens assembly and a second driving unit, at least one processor, and memory storing instructions.

According to an embodiment, the electronic device, based on a request for execution of a camera function, may display, through the display, a preview image obtained using the second camera.

According to an embodiment, the electronic device may drive the first driving unit using a pulse width modulation (PWM) driving method during at least a portion of a time period in which the preview image is obtained through the second camera.

According to an embodiment, the electronic device may drive the second driving unit using a linear driving method during at least a portion of a time period in which the preview image is obtained through the second camera.

According to an embodiment, a method of operating an electronic device may include displaying, through a display included in the electronic device, a preview image obtained using a second camera included in the electronic device, based on a request for execution of a camera function.

According to an embodiment, the method of operating the electronic device may include driving the first driving unit using a pulse width modulation (PWM) driving method during at least a portion of a time period in which the preview image is obtained through the second camera.

According to an embodiment, the method of operating the electronic device may include driving the second driving unit using a linear driving method during at least a portion of a time period in which the preview image is obtained through the second camera.

According to an embodiment, a non-transitory recording medium may store instructions capable of executing an operation of displaying, through a display included in an electronic device, a preview image obtained using a second camera included in the electronic device, based on a request for execution of a camera function.

According to an embodiment, the non-transitory recording medium may store instructions capable of executing an operation of driving a first driving unit included in the electronic device using a pulse width modulation (PWM) driving method during at least a portion of a time period in which the preview image is obtained through the second camera.

According to an embodiment, the non-transitory recording medium may store instructions capable of executing an operation of driving a second driving unit included in the electronic device using a linear driving method during at least a portion of a time period in which the preview image is obtained through the second camera.

### [Brief Description of Drawings]

FIG. 1 is a block diagram of an electronic device in a network environment according to various embodiments.
FIG. 2 is a block diagram illustrating a camera module according to an embodiment.
FIG. 3A is a schematic block diagram illustrating an electronic device according to an embodiment.
FIG. 3B is a diagram illustrating the rear face of an electronic device according to an embodiment.
FIG. 4A is a diagram illustrating a first camera according to an embodiment.
FIG. 4B is a diagram illustrating a driving circuit representing a portion of a first driving unit and a value of current consumed by the first driving unit according to an embodiment.
FIG. 4C is a diagram illustrating a driving circuit representing a portion of a first driving unit and a value of current consumed by the first driving unit according to an embodiment.
FIG. 5A is a diagram illustrating the state where an electronic device displays an image on a display according to an embodiment.
FIG. 5B is a diagram illustrating the state where an electronic device displays an image on a display according to an embodiment.
FIG. 6 is a flowchart illustrating an operation in which an electronic device drives a first camera and a second camera according to an embodiment.
FIG. 7 is a flowchart illustrating an operation in which an electronic device moves a first camera, based on current consumed by a first driving unit, according to an embodiment.
FIG. 8 is a flowchart illustrating an operation in which an electronic device moves a first camera, based on current consumed by a first driving unit, according to an embodiment.
FIG. 9A is a flowchart illustrating an operation in which an electronic device moves a first camera, based on an angle with the ground, according to an embodiment.
FIG. 9B is a diagram illustrating the angle between an electronic device and the ground according to an embodiment.
FIG. 9C is a diagram illustrating a graph of the position of a first magnet and the value of current consumed by the first driving unit corresponding to the position of the first magnet according to an embodiment.
FIG. 10 is a flowchart illustrating an operation in which an electronic device moves a first camera, based on the position of a first magnet identified in the state in which there is no movement of the first camera, according to an embodiment.
FIG. 11 is a flowchart illustrating an operation in which an electronic device drives a first camera if a magnification for the first camera is adjusted according to an embodiment.
FIG. 12 is a flowchart illustrating an operation in which an electronic device drives a second camera according to an embodiment.
FIG. 13 is a flowchart illustrating an operation in which an electronic device drives a third camera according to an embodiment.
FIG. 14 is a flowchart illustrating an operation in which an electronic device drives a first camera, a second camera, and a third camera according to an embodiment.

### [Mode for Carrying out the Invention]

Hereinafter, embodiments of the disclosure will be described in detail with reference to the drawings such that those skilled in the art to which the disclosure pertains are able to easily execute the disclosure. However, the disclosure may be implemented in several different forms and is not limited to the embodiments described herein. In connection with the description of the drawings, identical or similar reference numerals may be used for identical or similar elements. In addition, descriptions of well-known functions and configurations may be omitted from the drawings and related descriptions for clarity and brevity.

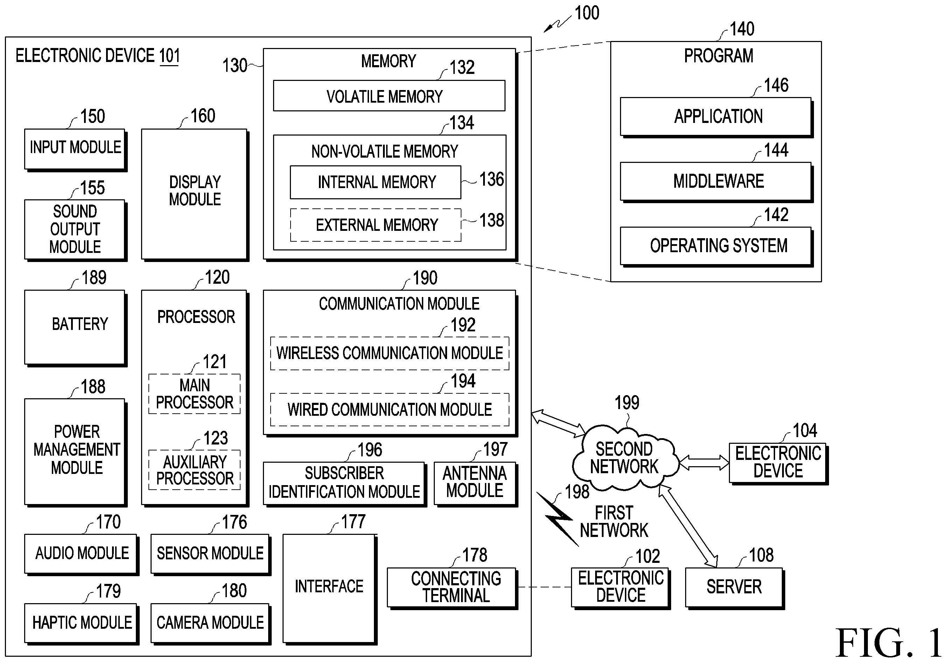

FIG. 1 is a block diagram illustrating an electronic device 101 in a network environment 100 according to various embodiments. Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device 104 via the first network 198 (e.g., a short-range communication network, such as BluetoothTM, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to an embodiment, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

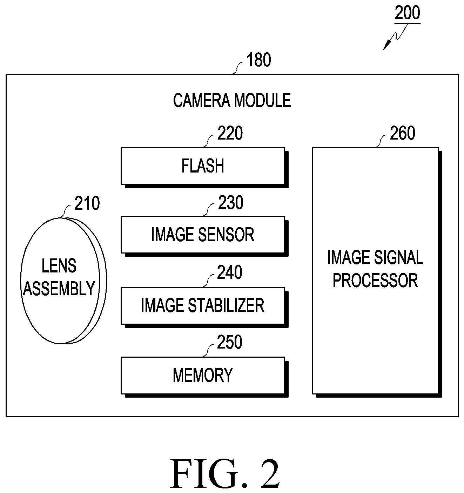

FIG. 2 is a block diagram 200 illustrating the camera module 180 according to an embodiment.

Referring to FIG. 2, the camera module 180 may include a lens assembly 210, a flash 220, an image sensor 230, an image stabilizer 240, a memory 250 (e.g., buffer memory), or an image signal processor 260. The lens assembly 210 may collect light emitted or reflected from an object whose image is to be taken. The lens assembly 210 may include one or more lenses. According to an embodiment, the camera module 180 may include a plurality of lens assemblies 210. In such a case, the camera module 180 may form, for example, a dual camera, a 360-degree camera, or a spherical camera. Some of the plurality of lens assemblies 210 may have the same lens attribute (e.g., view angle, focal length, auto-focusing, f number, or optical zoom), or at least one lens assembly may have one or more lens attributes different from those of another lens assembly. The lens assembly 210 may include, for example, a wide-angle lens or a telephoto lens.

The flash 220 may emit light that is used to reinforce light reflected from an object. According to an embodiment, the flash 220 may include one or more light emitting diodes (LEDs) (e.g., a red-green-blue (RGB) LED, a white LED, an infrared (IR) LED, or an ultraviolet (UV) LED) or a xenon lamp. The image sensor 230 may obtain an image corresponding to an object by converting light emitted or reflected from the object and transmitted via the lens assembly 210 into an electrical signal. According to an embodiment, the image sensor 230 may include one selected from image sensors having different attributes, such as a RGB sensor, a black-and-white (BW) sensor, an IR sensor, or a UV sensor, a plurality of image sensors having the same attribute, or a plurality of image sensors having different attributes. Each image sensor included in the image sensor 230 may be implemented using, for example, a charged coupled device (CCD) sensor or a complementary metal oxide semiconductor (CMOS) sensor.

The image stabilizer 240 may move the image sensor 230 or at least one lens included in the lens assembly 210 in a particular direction, or control an operational attribute (e.g., adjust the read-out timing) of the image sensor 230 in response to the movement of the camera module 180 or the electronic device 101 including the camera module 180. This allows compensating for at least part of a negative effect (e.g., image blurring) by the movement on an image being captured. According to an embodiment, the image stabilizer 240 may sense such a movement by the camera module 180 or the electronic device 101 using a gyro sensor (not shown) or an acceleration sensor (not shown) disposed inside or outside the camera module 180. According to an embodiment, the image stabilizer 240 may be implemented, for example, as an optical image stabilizer. The memory 250 may store, at least temporarily, at least part of an image obtained via the image sensor 230 for a subsequent image processing task. For example, if image capturing is delayed due to shutter lag or multiple images are quickly captured, a raw image obtained (e.g., a Bayer-patterned image, a high-resolution image) may be stored in the memory 250, and its corresponding copy image (e.g., a low-resolution image) may be previewed via the display device 160. Thereafter, if a specified condition is met (e.g., by a user's input or system command), at least part of the raw image stored in the memory 250 may be obtained and processed, for example, by the image signal processor 260. According to an embodiment, the memory 250 may be configured as at least part of the memory 130 of FIG. 1 or as a separate memory that is operated independently from the memory 130.

The image signal processor 260 may perform one or more image processing with respect to an image obtained via the image sensor 230 or an image stored in the memory 250. The one or more image processing may include, for example, depth map generation, three-dimensional (3D) modeling, panorama generation, feature point extraction, image synthesizing, or image compensation (e.g., noise reduction, resolution adjustment, brightness adjustment, blurring, sharpening, or softening). Additionally or alternatively, the image signal processor 260 may perform control (e.g., exposure time control or read-out timing control) with respect to at least one (e.g., the image sensor 230) of the components included in the camera module 180. An image processed by the image signal processor 260 may be stored back in the memory 250 for further processing, or may be provided to an external component (e.g., the memory 130, the display device 160, the electronic device 102, the electronic device 104, or the server 108) outside the camera module 180. According to an embodiment, the image signal processor 260 may be configured as at least part of the processor 120 of FIG. 1, or as a separate processor that is operated independently from the processor 120. If the image signal processor 260 is configured as a separate processor from the processor 120, at least one image processed by the image signal processor 260 may be displayed, by the processor 120, via the display device 160 as it is or after being further processed.

According to an embodiment, the electronic device 101 may include a plurality of camera modules 180 having different attributes or functions. In such a case, at least one of the plurality of camera modules 180 may form, for example, a wide-angle camera and at least another of the plurality of camera modules 180 may form a telephoto camera. Similarly, at least one of the plurality of camera modules 180 may form, for example, a front camera and at least another of the plurality of camera modules180 may form a rear camera.

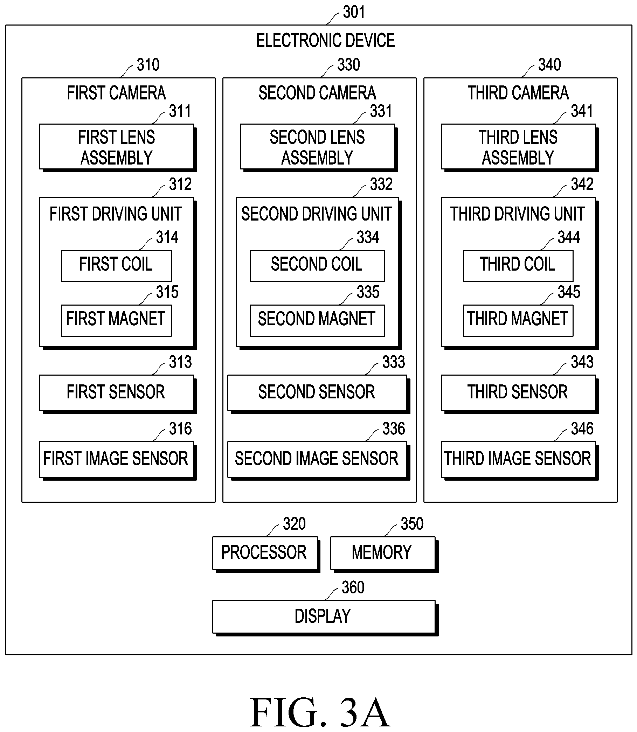

FIG. 3A is a schematic block diagram illustrating an electronic device according to an embodiment.

Referring to FIG. 3A, according to an embodiment, an electronic device 301 may include a first camera 310, a second camera 330, a processor 320, memory 350, and a display 360.

According to an embodiment, the processor 320 may control the overall operation of the electronic device 301. For example, the processor 320 may be implemented to be identical or similar to the processor 120 in FIG. 1.

According to an embodiment, the electronic device 301 may include a plurality of cameras. For example, the plurality of cameras may include a first camera 310 and a second camera 330. According to an embodiment, the first camera 310 and the second camera 330 may be implemented to be identical or similar to the camera module 180 in FIG. 2. According to an embodiment, the angle of view of the first camera 310 may be different from the angle of view of the second camera 330. According to an embodiment, the first camera 310 and the second camera 330 may be disposed on the rear face of the electronic device 301.

According to an embodiment, the first camera 310 may include a first lens assembly 311, a first driving unit 312, a first sensor 313, and a first image sensor 316. According to an embodiment, the second camera 330 may include a second lens assembly 331, a second driving unit 332, a second sensor 333, and a second image sensor 336.

According to an embodiment, the first driving unit 312 may include a first coil 314 and a first magnet 315. According to an embodiment, the second driving unit 332 may include a second coil 334 and a second magnet 335.

According to an embodiment, the driving methods of the first camera 310 and the second camera 330 may be configured differently. According to an embodiment, the processor 320 may drive the first camera 310 or the second camera 330 using a pulse width modulation (PWM) driving method or a linear driving method. According to an embodiment, the operation of driving the first camera 310 or the second camera 330 may include the operation of driving the first driving unit 312 or the second driving unit 332. According to an embodiment, the operation of driving the first driving unit 312 or the second driving unit 332 may include the operation of moving the position of the first driving unit 312 or the second driving unit 332.

According to an embodiment, the operation of moving the position of the first driving unit 312 may include the operation of moving the position of the first coil 314 or the first magnet 315. According to an embodiment, the position of the first lens assembly 311 may be moved based on the position movement of the first coil 314 or the first magnet 315. According to an embodiment, the operation of moving the position of the second driving unit 332 may include the operation of moving the position of the second coil 334 or the second magnet 335. According to an embodiment, the position of the second lens assembly 331 may be moved based on the position movement of the second coil 334 or the second magnet 335.

According to an embodiment, the first coil 314 and the first image sensor 316 may be implemented as one module. According to an embodiment, the operation of moving the position of the first driving unit 312 may include the operation of moving the positions of the first coil 314 and the first image sensor 316. According to an embodiment, the first magnet 315 and the first image sensor 316 may be implemented as one module. According to an embodiment, the operation of moving the position of the first driving unit 312 may include the operation of moving the position of the module including the first magnet 315 and the first image sensor 316.

According to an embodiment, the second coil 334 and the second image sensor 336 may be implemented as one module. According to an embodiment, the operation of moving the position of the second driving unit 332 may include the operation of moving the positions of the second coil 334 and the second image sensor 336. According to an embodiment, the second magnet 335 and the second image sensor 336 may be implemented as one module. According to an embodiment, the operation of moving the position of the second driving unit 332 may include the operation of moving the position of the module including the second magnet 335 and the second image sensor 336. For example, the processor 320 may perform a sensor shift operation.

According to an embodiment, the first coil 314, the first image sensor 316, and the first lens assembly 311 may be implemented as one module. According to an embodiment, the operation of moving the position of the first driving unit 312 may include the operation of moving the position of the module including the first coil 314, the first image sensor 316, and the first lens assembly 311. According to an embodiment, the second magnet 335, the second image sensor 336, and the second lens assembly 331 may be implemented as one module. According to an embodiment, the operation of moving the position of the second driving unit 332 may include the operation of moving the position of the module including the second magnet 335, the second image sensor 336, and the second lens assembly 331. For example, the processor 320 may perform a module shift operation.

According to an embodiment, the PWM driving method may include a method in which the processor 320 performs control to adjust the duty ratio of turning on or off a driving power source and applies the voltage or current output from the driving power source to the driving unit (e.g., the coil). For example, the current applied to the driving unit by the PWM driving method may include pulse waves. According to an embodiment, the linear driving method may include a method in which the processor 320 adjusts the amplitude of the voltage or current output from the driving power source and applies the same to the driving unit.

According to an embodiment, the processor 320 may identify a request for execution of a camera function. According to an embodiment, the request for execution of a camera function may include a request for displaying an image obtained using the first camera 310 or the second camera 330 through the display 360. According to an embodiment, if an image is obtained based on the execution of an application related to the camera, the processor 320 may identify that there is a request for execution of a camera function.

According to an embodiment, the processor 320 may display, on the display 360, the image obtained using the first camera 310 or the second camera 330, based on the request for execution of the camera function. According to an embodiment, the image may include a preview image.

According to an embodiment, if the image being displayed on the display 360 is identified not to be obtained through the first camera 310, the processor 320 may apply a first current to the first driving unit 312 so as to drive the first camera 310 using a pulse width modulation (PWM) driving method while the image is being displayed on the display 360. According to an embodiment, the processor 320 may obtain an image using the first camera 310 and, when not displaying the image on the display 360, drive the first camera 310 using the pulse width modulation (PWM) driving method. According to an embodiment, the processor 320 may perform image processing operations such as generating a depth map for the image or high-dynamic range (HDR) processing. According to an embodiment, the processor 320 may drive the first camera 310 using the pulse width modulation (PWM) driving method when the first camera 310 is in an inactive state in which the first camera 310 does not operate.

According to an embodiment, if an image is identified to be obtained through the second camera 330, the processor 320 may apply a second current to the second driving unit 332 so as to drive the second camera 330 using a linear driving method while the image is being displayed on the display 360.

According to an embodiment, the processor 320 may perform an optical image stabilization (OIS) function to apply a first current to the first driving unit 312, thereby moving the first camera 310 in a direction perpendicular to the optical axis. According to an embodiment, the processor 320 may perform an optical image stabilization (OIS) function to apply a second current to the second driving unit 332, thereby moving the second camera 330 in a direction perpendicular to the optical axis. For example, the processor 320 may apply a second current to the second coil 334 to move the second coil 334 or the second magnet 335 in a direction perpendicular to the optical axis. For example, the processor 320 may move the second lens assembly 331 in a direction perpendicular to the optical axis, based on the movement of the second coil 334 or the second magnet 335. According to an embodiment, the OIS function may include an operation performed by the image stabilizer 240 in FIG. 2. According to an embodiment, the OIS function may include a function of moving the first lens assembly 311 or controlling the operation characteristics (e.g., adjusting the read-out timing) of the first image sensor 316 of the first camera 310. According to an embodiment, the OIS function may include a function of moving the second lens assembly 331 or controlling the operation characteristics (e.g., adjusting the read-out timing) of the second image sensor 336 of the second camera 330.

According to an embodiment, the processor 320 may perform an auto-focus (AF) function to apply a first current to the first driving unit 312, thereby moving the first camera 310 in the optical axis direction. According to an embodiment, the processor 320 may apply a first current to the first coil 314 to move the first coil 314 or the first magnet 315 in the optical axis direction. For example, the processor 320 may move the first lens assembly 311 in the optical axis direction, based on the movement of the first coil 314 or the first magnet 315. According to an embodiment, the processor 320 may perform an auto-focus (AF) function to apply a second current to the second driving unit 332, thereby moving the first camera 310 and the second camera 330 in the optical axis direction. For example, the processor 320 may apply a second current to the second coil 334 to move the second coil 334 or the second magnet 335 in the optical axis direction. For example, the processor 320 may move the second lens assembly 331 in the optical axis direction, based on the movement of the second coil 334 or the second magnet 335.

According to an embodiment, the first driving unit 312 may include a driving unit to perform an optical image stabilization (OIS) function. According to an embodiment, the first driving unit 312 may include a driving unit to perform an auto-focus (AF) function.

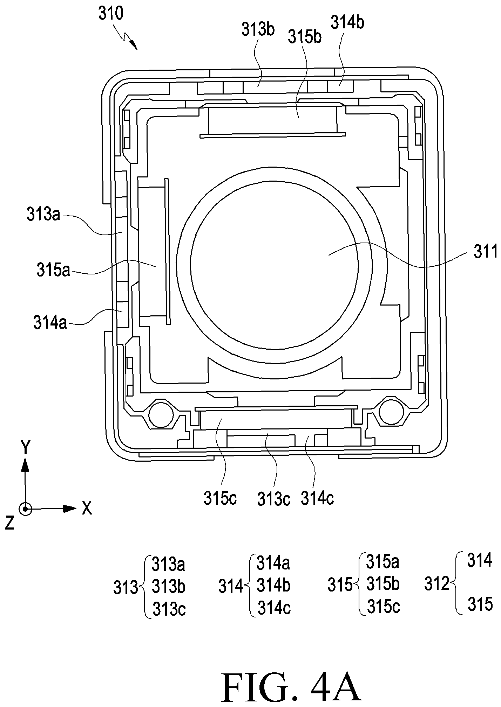

According to an embodiment, the first magnet 315 may include a plurality of magnets. According to an embodiment, the first magnet 315 may include a first x-axis magnet 315a (e.g., the first x-axis magnet 315a in FIG. 4A) and a first y-axis magnet 315b (e.g., the first y-axis magnet 315b in FIG. 4A), which move in a direction perpendicular to the optical axis direction. According to an embodiment, the first magnet 315 may include a first z-axis magnet 315c (e.g., the first z-axis magnet 315c in FIG. 4A) that moves in the optical axis direction. According to an embodiment, the first coil 314 may include a plurality of coils. According to an embodiment, the first coil 314 may include a first x-axis coil 314a (e.g., the first x-axis coil 314a in FIG. 4A) that electromagnetically interacts with the first x-axis magnet 315a, a first y-axis coil 314b (e.g., the first y-axis coil 314b in FIG. 4A) that electromagnetically interacts with the first y-axis magnet 315b, and a first z-axis coil 314c (e.g., the first z-axis coil 314c in FIG. 4A) that electromagnetically interacts with the first z-axis magnet 315c. According to an embodiment, the processor 320 may apply a first current to the first coil 314 such that the magnet 315 moves to a first designated position. According to an embodiment, the processor 320 may move the first magnet 315 to the first designated position, based on applying the first current to the first coil 314. According to an embodiment, the processor 320 may identify a plurality of positions corresponding to the movable range of the first magnet 315 through the first sensor 313. According to an embodiment, the first sensor 313 may be implemented as a Hall sensor. According to an embodiment, the first designated position may include a central position among the plurality of positions. According to an embodiment, the processor 320 may move the first magnet 315 to the central position among the plurality of positions corresponding to the movable range of the first magnet 315. According to an embodiment, the plurality of positions corresponding to the movable range of the first magnet 315, and the central position among the plurality of positions corresponding to the movable range of the first magnet 315 may be pre-stored in the memory 350.

According to an embodiment, the processor 320 may identify values of current consumed by the first driving unit 312 when the first magnet 315 moves between the plurality of positions. According to an embodiment, the processor 320 may determine the position, based on the values of current consumed by the first driving unit 312 (e.g., the first magnet 315 or the first coil 314). According to an embodiment, the processor 320 may move the first magnet 315, based on the determined position. According to an embodiment, the processor 320 may identify a position where the value of current consumed by the first driving unit 312 is minimized from among the plurality of positions. According to an embodiment, the first designated position may include the position of the first magnet 315 where the consumption current value becomes a specific value. According to an embodiment, the first designated position may include the position of the first magnet 315 where the consumption current value is the minimum among the consumption current values. According to an embodiment, the processor 320 may move the first magnet 315 to a position where the consumption current value is minimized. According to an embodiment, the processor 320 may move the first magnet 315 to a specific position where the consumption current value has a specific value.

According to an embodiment, a lookup table representing the relationship between a plurality of positions corresponding to the movable range of the first magnet 315 and consumption current values may be stored in the memory 350. According to an embodiment, the processor 320 may identify the position of the first magnet 315, based on a plurality of consumption current values, using the lookup table. According to an embodiment, the processor 320 may identify the position of the first magnet 315 where the consumption current value is the minimum, among the consumption current values, using the lookup table. According to an embodiment, the processor 320 may move the first magnet 315 to the identified position. According to an embodiment, the processor 320 may identify the angle formed between the electronic device 301 and the ground through a sensor (not shown). For example, the sensor may be implemented as an inertial sensor. However, this is only an example and may not be limited thereto.

According to an embodiment, a lookup table representing the relationship of the angle between the electronic device 301 and the ground, the values of current consumed by the first driving unit 312, and the plurality of positions may be pre-stored in the memory 350. For example, the plurality of positions may include positions of the first magnet 315. According to an embodiment, the first designated position may include the position of the first magnet 315 where the consumption current value is minimized from among the plurality of positions at the angle formed between the electronic device 301 and the ground. According to an embodiment, the first designated position may include the position of the first magnet 315 where the consumption current value is a specific value from among the plurality of positions at the angle formed between the electronic device 301 and the ground. According to an embodiment, the processor 320 may move the first magnet 315 to the position determined based on the consumption current value at an angle between the electronic device 301 and the ground, which is identified through the sensor, using the lookup table. According to an embodiment, the processor 320 may move the first magnet 315 to the position where the consumption current value of the first current is minimized at an angle between the electronic device 301 and the ground, which is identified through the sensor, using the lookup table.

According to an embodiment, the processor 320 may identify whether the angle formed between the electronic device 301 and the ground is equal to or greater than about 45 degrees. According to an embodiment, if the angle formed between the electronic device 301 and the ground is identified to be equal to or greater than about 45 degrees, the processor 320 may identify a plurality of values of current consumed by the first driving unit 312, which is identified when the angle between the electronic device 301 and the ground is about 90 degrees. According to an embodiment, the processor 320 may move the first magnet 315, based on the plurality of consumption current values. According to an embodiment, the first magnet 315 may be moved to a position where the consumption current value is minimized, among the plurality of consumption current values identified when the angle between the electronic device 301 and the ground is about 90 degrees. According to an embodiment, if the angle formed between the electronic device 301 and the ground is less than about 45 degrees, the processor 320 may identify a plurality of values of current consumed by the first driving unit 312, which is identified when the angle between the electronic device 301 and the ground is about 0 degrees. According to an embodiment, the processor 320 may move the first magnet 315, based on the plurality of consumption current values. According to an embodiment, the first magnet 315 may be moved to a position where the consumption current value is minimized, among the plurality of consumption current values identified when the angle between the electronic device 301 and the ground is about 0 degrees. 45 degrees, 90 degrees, and 0 degrees are examples, and embodiments of the disclosure may not be limited to the above angles.

According to an embodiment, the first designated position may include the position of the first magnet 315 that is identified in the state where there is no movement of the first camera 310. According to an embodiment, if the movement of the first camera 310 is identified according to the movement of the electronic device 301, the processor 320 may identify a first position of the first magnet 315 through the first sensor 313. According to an embodiment, the processor 320 may determine the movement of the electronic device 301, which is obtained through a sensor (not shown) (e.g., a gyro sensor or an acceleration sensor), to be the movement of the first camera 310 included in the electronic device 301. According to an embodiment, the processor 320 may identify a second position of the first magnet 315 identified in the state where there is no movement of the first camera 310. According to an embodiment, the processor 320 may move the first magnet 315 from the first position to the second position. For example, the second position may include a pre-designated position. For example, the second position may include a position obtained through the first sensor 313 before the first camera 310 begins to move.

According to an embodiment, the processor 320 may identify a user's input for adjusting the magnification for the first camera 310. According to an embodiment, the processor 320 may switch the method of driving the first camera 310, based on the user's input for adjusting the magnification of the first camera 310. According to an embodiment, the processor 320 may switch the driving method of the first camera 310 from a PWM driving method to a linear driving method. According to an embodiment, the processor 320 may drive the first camera 310 using a linear driving method. According to an embodiment, the processor 320 may apply a second current to the second coil 334 such that the second magnet 335 moves to a second designated position. According to an embodiment, the processor 320 may move the second magnet 335 to the second designated position, based on applying a second current to the second coil 334. According to an embodiment, the second designated position may include the position of the second magnet 335 identified in the state where there is no movement of the second camera 330. According to an embodiment, if the movement of the second camera 330 is identified, the processor 320 may move the second magnet 335 to the second magnet 335 identified in the state where there is no movement of the second camera 330. For example, the position of the second magnet 335 identified in the state where there is no movement of the second camera 330 may include a pre-designated position. For example, the position of the second magnet 335 identified in the state where there is no movement of the second camera 330 may include a position obtained through the second sensor 333 before the second camera 330 begins to move.

Depending on the implementation, according to an embodiment, the second designated position may include the central position among a plurality of positions corresponding to the movable range of the second magnet 335. According to an embodiment, the second designated position may include the position determined based on the values of current consumed by the second driving unit 332. According to an embodiment, the second designated position may include a position where the value of current consumed by the second driving unit 332 is minimized. According to an embodiment, the second designated position may include a position where the value of current consumed by the second driving circuit 332 is minimized at the angle formed between the electronic device 301 and the ground using a lookup table. The second designated position may include a consumption current value of the second current identified when the angle formed between the electronic device 301 and the ground is about 90 degrees, or a consumption current value of the second current identified when the angle is about 0 degrees. According to an embodiment, the second designated position may include a position where the consumption current value of the second current, identified when the angle formed between the electronic device 301 and the ground is about 90 degrees, is minimized or a position where the consumption current value of the second current, identified when the angle formed between the electronic device 301 and the ground is about 0 degrees, is minimized. According to an embodiment, the processor 320, if the angle between the electronic device 301 and the ground is equal to or greater than 45 degrees, may move the second magnet 335 to the position where the consumption current value of the second current, identified when the angle formed between the electronic device 301 and the ground is about 90 degrees, is minimized. According to an embodiment, the processor 320, if the angle between the electronic device 301 and the ground is less than about 45 degrees, may move the second magnet 335 to the position where the consumption current value of the second current, identified when the angle formed between the electronic device 301 and the ground is about 0 degrees, is minimized. However, these are only examples, and embodiments of the disclosure may not be limited to the above angles.

According to an embodiment, the electronic device 301 may further include a third camera 340. According to an embodiment, the third camera 340 may be disposed on the rear face of the electronic device 301. According to an embodiment, the third camera 340 may include a third lens assembly 341, a third driving unit 342, a third sensor 343, and a third image sensor 346. According to an embodiment, the angle of view of the third camera 340 may be different from the angle of view of the first camera 310 and the angle of view of the second camera 330. According to an embodiment, the third driving unit 342 may include a third magnet 345 and a third coil 344. According to an embodiment, the third sensor 343 may include a Hall sensor. According to an embodiment, the third camera 340 may be implemented to be the same as or similar to the camera module 180 in FIG. 2.

According to an embodiment, if the image is identified not to be obtained through the third camera 340, the processor 320 may apply a third current to the third driving unit 342 so as to drive the third camera 340 using a PWM driving method while the image is being displayed on the display 360. According to an embodiment, the processor 320 may obtain an image using the third camera 340 and, when not displaying the image on the display 360, drive the third camera 340 using the pulse width modulation (PWM) driving method. According to an embodiment, the processor 320 may drive the third camera 340 using the pulse width modulation (PWM) driving method when the third camera 340 is in an inactive state in which third camera 340 does not operate. According to an embodiment, the operation of driving the third camera 340 may include applying a third current to the third driving unit 342 to move the third magnet 345 or the third coil 344.

According to an embodiment, the processor 320 may perform an optical image stabilization (OIS) function to apply a third current to the third driving unit 342, thereby moving the third camera 340 in a direction perpendicular to the optical axis. According to an embodiment, the OIS function may include an operation performed by the image stabilizer 240 in FIG. 2. According to an embodiment, the OIS function may include a function of moving the third lens assembly 341 or controlling the operation characteristics (e.g., adjusting the read-out timing) of the third image sensor 346 of the third camera 340. According to an embodiment, the processor 320 may perform an auto-focus (AF) function to apply a third current to the third driving unit 342, thereby moving the third camera 340 in the optical axis direction.

According to an embodiment, the processor 320 may apply a current to the third coil 344 such that the third magnet 345 moves to a third designated position. According to an embodiment, the processor 320 may move the third magnet 345 to the third designated position, based on applying the third current to the third coil 344. According to an embodiment, the third designated position may include the central position among a plurality of positions corresponding to the movable range of the third magnet 345. According to an embodiment, the third designated position may include a specific position determined based on the values of current consumed by the third driving unit 342. According to an embodiment, the third designated position may include a position where the consumption current value of the third current by the third driving unit 342 is minimized. According to an embodiment, the third designated position may include positions determined using a lookup table representing the relationship of angles formed between the electronic device 301 and the ground (e.g., about 0 degrees or about 90 degrees), a plurality of positions, and a plurality of values of current consumed by the third driving unit 342. According to an embodiment, the third designated position may include a position where the consumption current value of the third current by the third driving unit 342, which is identified when the angle formed between the electronic device 301 and the ground is about 90 degrees, is minimized or a position where the consumption current value of the third current by the third driving unit 342, which is identified when the angle formed between the electronic device 301 and the ground is about 0 degrees, is minimized.

According to an embodiment, the description of the first camera 310 may be equally applied to the third camera 340.

According to an embodiment, the processor 320 may set a method of moving the first driving unit 312 and a method of moving the third driving unit 342 to be different.

For example, the processor 320 may move the first magnet 315 to the position of the first magnet 315 identified in the state where there is no movement of the electronic device 301. At this time, the processor 320 may move the third magnet 335 to the position of the third magnet 335 where the consumption of the third current by the third driving unit 342 is minimized. However, this is an example, and embodiments of the disclosure may not be limited thereto.

According to an embodiment, the processor 320, if a user's input for a function of switching a photographing mode, a function of applying a filter, or a function of adjusting the timer for photographing is identified, may not drive the first camera 310 or the third camera 340 that is driven using a PWM driving method. For example, the function of switching the photographing mode may include switching from a front-camera photographing mode to a rear-camera photographing mode, or switching from the rear-camera photographing mode to the front-camera photographing mode. For example, the function of switching the photographing mode may include switching from an image photographing mode to a video photographing mode, or switching from the video photographing mode to the image photographing mode. According to an embodiment, the processor 320 may not move the first magnet 315 to the first designated position when the first camera 310 is not driven. According to an embodiment, the processor 320 may not move the third magnet 345 to the third designated position when the third camera 340 is not driven. According to an embodiment, the description of the first designated position of the first magnet 315 may be applied to the first coil 314 in the same manner. According to an embodiment, the description of the second designated position of the second magnet 335 may be applied to the second coil 334 in the same manner. According to an embodiment, the description of the third designated position of the third magnet 345 may be applied to the third coil 344 in the same manner.

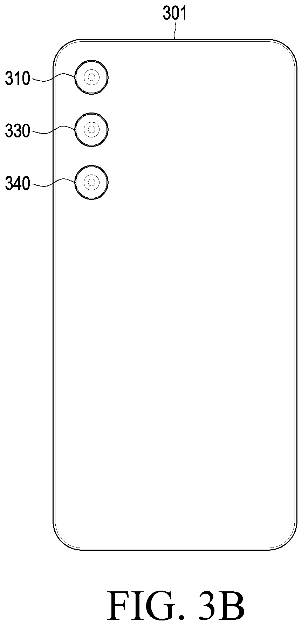

FIG. 3B is a diagram illustrating the rear face of an electronic device according to an embodiment.

Referring to FIG. 3B, an electronic device 301 (e.g., the electronic device 301 in FIG. 3A) may include a plurality of cameras. The electronic device 301 may include a first camera 310 and a second camera 330. Depending on implementation, the electronic device 301 may further include a third camera 340. However, these are examples, and the number of cameras may not be limited thereto. According to an embodiment, the first camera 310, the second camera 330, and the third camera 340 may be disposed on the rear face of the electronic device 301.

According to an embodiment, the angle of view of the first camera 310, the angle of view of the second camera 330, and the angle of view of the third camera 340 may be different from each other. For example, the first camera 310 may be a tele-camera. For example, the second camera 330 may be a wide camera. For example, the third camera 340 may be an ultra-wide camera. However, in embodiments of the disclosure, the angles of view of the first camera 310, second camera 330, and third camera 340 may not be limited to the above examples.

FIG. 4A is a diagram illustrating a first camera according to an embodiment.

Referring to FIG. 4A, according to an embodiment, the first camera 310 may include a first lens assembly 311, a first sensor 313, and a first driving unit 312. According to an embodiment, the first driving unit 312 may include a first magnet 315 and a first coil 314.

According to an embodiment, the first driving unit 312 may include a driving unit for performing an optical image stabilization (OIS) function to move the first camera 310 in a direction perpendicular to the optical axis. According to an embodiment, the first driving unit 312 may include a driving unit for performing an auto-focus (AF) function to move the first camera 310 in the optical axis direction.

According to an embodiment, the optical axis direction may indicate the z-axis direction. According to an embodiment, the direction perpendicular to the optical axis may indicate the x-axis and y-axis directions.

According to an embodiment, the first magnet 315 may include at least one of a first x-axis magnet 315a, a first y-axis magnet 315b, or a first z-axis magnet 315c. According to an embodiment, the first x-axis magnet 315a may indicate a magnet that moves in the x-axis direction, the first y-axis magnet 315b may indicate a magnet that moves in the y-axis direction, and the first z-axis magnet 315c may indicate a magnet that moves in the z-axis direction.

According to an embodiment, the first coil 314 may include at least one of a first x-axis coil 314a, a first y-axis coil 314b, or a first z-axis coil 314c. According to an embodiment, the first x-axis coil 314a may indicate a coil to which current is applied to provide a driving force to move the first x-axis magnet 315a, the first y-axis coil 314b may indicate a coil to which current is applied to provide a driving force to move the first y-axis magnet 315b, and the first z-axis coil 314c may indicate a coil to which current is applied to provide the first z-axis magnet 315c with a driving force to move the first z-axis magnet 315c. For example, a processor 320 (e.g., the processor 320 in FIG. 3A) may move the first x-axis magnet 315a, based on electromagnetic force generated through electromagnetic interaction between the first x-axis coil 314a and the first x-axis magnet 315a. For example, the processor 320 (e.g., the processor 320 in FIG. 3A) may move the first y-axis magnet 315b, based on electromagnetic force generated through electromagnetic interaction between the first y-axis coil 314b and the first y-axis magnet 315b. For example, the processor 320 (e.g., the processor 320 in FIG. 3A) may move the first z-axis magnet 315c, based on electromagnetic force generated through electromagnetic interaction between the first z-axis coil 314c and the first z-axis magnet 315c.

According to an embodiment, the first sensor 313 may include at least one of a first x-axis sensor 313a, a first y-axis sensor 313b, or a first z-axis sensor 313c. According to an embodiment, the first x-axis sensor 313a may sense the position of the first x-axis magnet 315a. According to an embodiment, the first y-axis sensor 313b may sense the position of the first y-axis magnet 315b. According to an embodiment, the z-axis sensor 313c may sense the position of the z-axis magnet 315c.

Although not shown, according to an embodiment, the second camera 330 (e.g., the second camera 330 in FIG. 3A) may include at least one of a second x-axis magnet, a second y-axis magnet, or a second z-axis magnet. According to an embodiment, the second camera 330 (e.g., the second camera 330 in FIG. 3A) may include at least one of a second x-axis coil, a second y-axis coil, and a second z-axis coil. According to an embodiment, the second x-axis magnet may indicate a magnet that moves in the x-axis direction, the second y-axis magnet may indicate a magnet that moves in the y-axis direction, and the second z-axis magnet may indicate a magnet that moves in the z-axis direction. According to an embodiment, the second x-axis coil may indicate a coil to which current is applied to provide a driving force to move the second x-axis magnet, the second y-axis coil may indicate a coil to provide a driving force to move the second y-axis magnet, and the second z-axis coil may indicate a coil to which current is applied to provide the second z-axis magnet with a driving force to move the second z-axis magnet.

According to an embodiment, the third camera 340 (e.g., the third camera 340 in FIG. 3A) may include at least one of a third x-axis magnet, a third y-axis magnet, or a third z-axis magnet. According to an embodiment, the third camera 340 (e.g., the third camera 340 in FIG. 3A) may include at least one of a third x-axis coil, a third y-axis coil, and a third z-axis coil. According to an embodiment, the third x-axis magnet may indicate a magnet that moves in the x-axis direction, the third y-axis magnet may indicate a magnet that moves in the y-axis direction, and the third z-axis magnet may indicate a magnet that moves in the z-axis direction. According to an embodiment, the third x-axis coil may indicate a coil to which current is applied to provide a driving force to move the third x-axis magnet, the third y-axis coil may indicate a coil to provide a driving force to move the third y-axis magnet, and the third z-axis coil may indicate a coil to which current is applied to provide the third z-axis magnet with a driving force to move the third z-axis magnet.

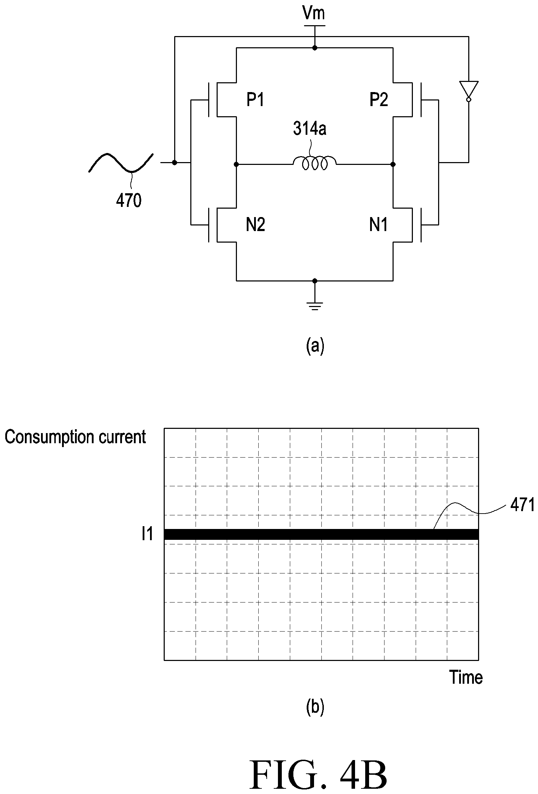

FIG. 4B is a diagram illustrating a driving circuit representing a portion of a first driving unit and a value of current consumed by the first driving unit according to an embodiment.

Referring to (a) in FIG. 4B, according to an embodiment, the first driving unit 312 (e.g., the first driving unit 312 in FIG. 3A) may include a driving circuit, a first coil 314, and a first magnet 315. According to an embodiment, the driving circuit may include a plurality of first p-channel metal oxide semiconductor (PMOS) transistors P1, a plurality of second PMOS transistors P2, and a plurality of first n-channel metal oxide semiconductor (NMOS) transistors N1, and a plurality of second NMOS transistors N2.

According to an embodiment, the first PMOS transistor P1, the second PMOS transistor P2, the first NMOS transistor N1, and the second NMOS transistor N2 may be implemented as field effect transistor (FET) elements or bipolar junction transistor (BJT) elements. According to an embodiment, the first driving unit 312 may be implemented as only a plurality of NMOS transistors, instead of a plurality of PMOS transistors. However, these are examples, and embodiments of the disclosure may not be limited thereto.

According to an embodiment, the first PMOS transistor P1, the second PMOS transistor P2, the first NMOS transistor N1, and the second NMOS transistor N2 may be elements for controlling the direction of current applied to the first x-axis coil 314a. The first PMOS transistor P1, the second PMOS transistor P2, the first NMOS transistor N1, and the second NMOS transistor N2 may be elements for controlling the direction of current applied to the first y-axis coil 314b. According to an embodiment, the first PMOS transistor P1, the second PMOS transistor P2, the first NMOS transistor N1, and the second NMOS transistor N2 may be elements for controlling the direction of current applied to the first z-axis coil 314c.

According to an embodiment, the first PMOS transistor P1, the second PMOS transistor P2, the first NMOS transistor N1, and the second NMOS transistor N2 may form an H bridge.

According to an embodiment, the first PMOS transistor P1 may be disposed between a driving power source Vm and one end of the first x-axis coil 314a. According to an embodiment, the second NMOS transistor N2 may be disposed between one end of the first x-axis coil 314a (e.g., the first x-axis coil 314a in FIG. 4A) and the ground.

According to an embodiment, the second PMOS transistor P2 may be disposed between the driving power source Vm and the other end of the first x-axis coil 314a. According to an embodiment, the first NMOS transistor N1 may be disposed between the other end of the first x-axis coil 314a and the ground. According to an embodiment, the processor 320 may turn on the first PMOS transistor P1 and the first NMOS transistor N1, and turn off the second PMOS transistor P2 and the second NMOS transistor N2.

According to an embodiment, the current applied to the first coil 314 may flow in a first direction.

According to an embodiment, the processor 320 may turn on the second PMOS transistor P2 and the second NMOS transistor N2, and turn off the first PMOS transistor P1 and the first NMOS transistor N1. According to an embodiment, the current applied to the first coil 314 may flow in a second direction opposite the first direction.

According to an embodiment, the processor 320 may control the direction in which the first x-axis magnet 315a moves, based on controlling the direction in which the current flows.

According to an embodiment, the processor 320 may apply a voltage 470 to the driving circuit. The voltage 470 may represent a voltage output from the driving power source Vm. According to an embodiment, based on the voltage 470 being applied to the driving circuit, current or voltage may be applied to the first x-axis coil 314a. According to an embodiment, the processor 320 may apply current or voltage to the first x-axis coil 314a using a linear driving method. For example, the linear driving method may include a method in which the processor 320 adjusts the amplitude of the voltage or current output from the driving power source Vm and applies the same to the driving unit (e.g., the coil).

Although not shown, according to an embodiment, the first PMOS transistor P1, the second PMOS transistor P2, the first NMOS transistor N1, and the second NMOS transistor N2 may be disposed in the area where the first y-axis coil 314b is disposed. According to an embodiment, the first PMOS transistor P1, the second PMOS transistor P2, the first NMOS transistor N1, and the second NMOS transistor N2 may be disposed in the area where the first z-axis coil 314c is disposed.

According to an embodiment, the above descriptions may be equally applied to the second driving unit 332 and the third driving unit 342.

Referring to (b) in FIG. 4B, according to an embodiment, the processor 320 may identify the movement of the first x-axis magnet 315a according to the movement of the first camera 310. According to an embodiment, the processor 320 may drive the first x-axis coil 314a such that the first x-axis magnet 315a moves to a designated position.

According to an embodiment, the first x-axis magnet 315a may move to a position corresponding to the designated position, based on the current or voltage applied to the first x-axis coil 314a. According to an embodiment, the processor 320 may identify the current value 471 (I1) consumed by the first driving unit 312 to move the first x-axis magnet 315a to the position corresponding to the designated position.

Depending on the implementation, according to an embodiment, the processor 320 may identify the movement of the first x-axis coil 314a (e.g., the first x-axis coil 314a in FIG. 3A) according to the movement of the first camera 310. According to an embodiment, the processor 320 may drive the first x-axis coil 314a such that the first x-axis coil 314a moves to the designated position. According to an embodiment, the first x-axis coil 314a may move to the position corresponding to the designated position, based on the current or voltage applied to the first x-axis coil 314a. According to an embodiment, the processor 320 may include the current value 471 (I1) consumed by the first driving unit 312 to move the first x-axis coil 314a to the position corresponding to the designated position.

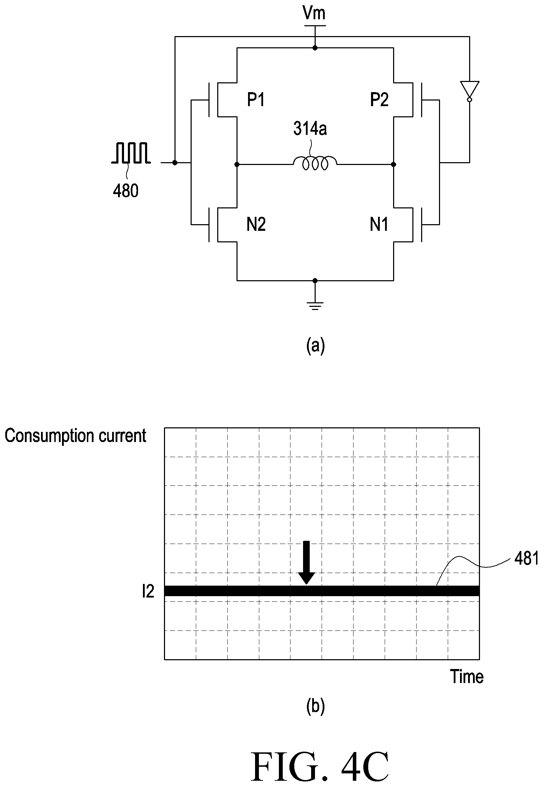

FIG. 4C is a circuit diagram illustrating a portion of a first driving unit and a diagram illustrating a value of current consumed by the first driving unit according to an embodiment.

Referring to (a) in FIG. 4C, according to an embodiment, the processor 320 (e.g., the processor 320 in FIG. 3A) may apply a voltage 480 to the driving circuit. The voltage 480 may represent the voltage output from the driving power source Vm. According to an embodiment, based on the voltage 480 being applied to the driving circuit, current or voltage may be applied to the first x-axis coil 314a (e.g., the first x-axis coil 314a in FIG. 4A).

According to an embodiment, the processor 320 may apply current or voltage to the first x-axis coil 314a using a pulse width modulation (PWM) driving method. For example, the PWM driving method may include a method in which the processor 320 controls the duty ratio to turn on and off the driving power source Vm and applies the voltage or current output from the driving power source Vm to the driving unit (e.g., the coil). For example, the voltage applied to the driving unit by the PWM driving method may include a pulse wave.

Referring to (b) in FIG. 4C, according to an embodiment, the processor 320 may identify the current value 481 (I2) consumed by the first driving unit 312 to move the first x-axis magnet 315a to a position corresponding to the designated position.

According to an embodiment, the processor 320 may identify the current value 481 (I2) consumed when the first driving unit 312 is driven using a pulse width modulation (PWM) driving method.

According to an embodiment, the current value 481 consumed when the first driving unit 312 is driven using a PWM driving method may be smaller than the current value 471 consumed when the first driving unit 312 is driven using a linear driving method.

According to an embodiment, if there is a movement of the first camera 310 that is not obtaining an image, the electronic device 301 (e.g., the electronic device 301 in FIG. 3A) may execute an OIS function or AF function to move the position of the first magnet 315. According to an embodiment, if there is a movement of the first camera 310 that obtained an image but is not displaying the same on the display 360, the electronic device 301 may execute an OIS function or AF function to move the position of the first magnet 315.

Depending on the implementation, according to an embodiment, if there is a movement of the first camera 310 that is not obtaining an image, the electronic device 301 may execute an OIS function or AF function to move the position of the first coil 314 (e.g., the first coil 314 in FIG. 3A). According to an embodiment, if there is a movement of the first camera 310 that obtained an image but is not displaying the same on the display 360, the electronic device 301 may execute an OIS function or AF function to move the position of the first coil 314.

According to an embodiment, when a camera is driven by the PMW driving method, there may be a lot of noise in the image obtained through the camera. Accordingly, the electronic device 301 may drive the camera that obtains images to be displayed on the display 360 in a linear driving manner in order to obtain a clear image.

A conventional electronic device including a plurality of cameras may drive both one camera that obtains an image to be displayed on the display and another camera that does not obtain an image to be displayed on the display using a linear driving method. This is due to the fact that all the cameras remain in a standby state for the OIS function (or AF function) of the plurality of cameras. However, if another camera that does not obtain an image to be displayed on the display is driven in a linear manner, excessive power consumption may occur.

According to an embodiment, the electronic device 301 may drive the first camera 310 that is not obtaining an image using the PWM driving method that consumes less power than the linear driving method, thereby reducing current consumption of the camera.

The following operations of the electronic device 301 described in the drawings may be performed by the processor 320. However, for convenience of explanation, operations performed by the processor 320 will be described as being performed by the electronic device 301.

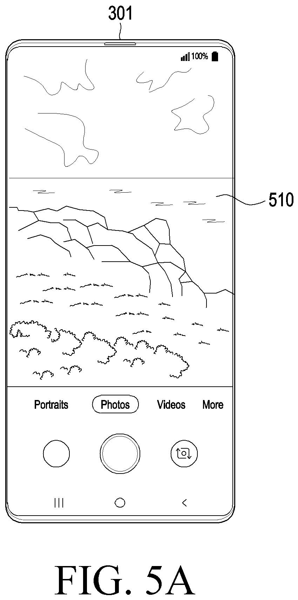

FIG. 5A is a diagram illustrating the state where an electronic device displays an image on a display according to an embodiment.

Referring to FIG. 5A, according to an embodiment, the electronic device 301 (e.g., the electronic device 301 in FIG. 3A) may provide a live preview mode of obtaining a preview image of a subject in real time using at least one of the first camera 310 (e.g., the first camera 310 in FIG. 3A) or the second camera 330 (e.g., the second camera 330 in FIG. 3A) and displaying the preview image through the display 360 (e.g., the display 360 in FIG. 3A).

According to an embodiment, the electronic device 301, while displaying the preview image through the display 360, may display a user interface that provides at least one of a function of adjusting the magnification of the first camera 310 or the second camera 330, a function of adjusting focus thereof, or a function of selecting an object to adjust focus on the subject or background included in the preview image. For example, the user interface may be displayed in an area of the display 360 where the preview image is displayed, or may be displayed in the remaining area of the display 360. For example, the electronic device 301 may obtain a first image using the first camera 310. For example, the electronic device 301 may obtain a second image using the second camera 330. According to an embodiment, the first image and the second image may include a preview image. According to an embodiment, the electronic device 301 may display a second image obtained through the second camera 330 on a first area 510 of the display 360. For example, the electronic device 301 may not display the first image (e.g., an image captured through the first camera 310) on the display 360. At this time, the electronic device 301 may not capture an image through the first camera 310 or may discard (or may not display, on the display 360) an image captured through the first camera 310.

According to an embodiment, the electronic device 301 may drive the first camera 310 using a pulse width modulation (PWM) driving method while the second image is being displayed on the display 360. For example, the electronic device 301 may apply a first current to the first driving unit 312 (e.g., the first driving unit 312 in FIG. 3A) using a pulse width modulation (PWM) driving method such that the first magnet 315 moves to the designated position for the OIS function (or AF function) of the first camera 310.

According to an embodiment, the electronic device 301 may drive the second camera 330 using a linear driving method while the second image is being displayed on the display 360. For example, the electronic device 301 may apply a second current to the second driving unit 332 using a linear driving method such that the second driving unit 332 (e.g., the second driving unit 332 in FIG. 3A) moves for the OIS function (or AF function) of the second camera 330.

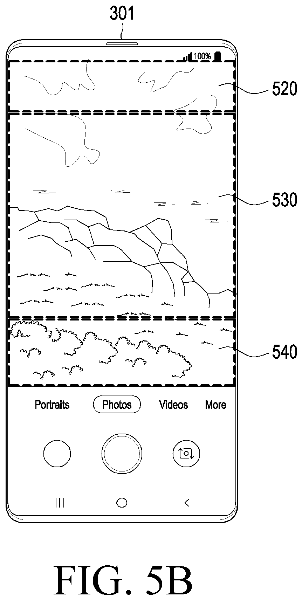

FIG. 5B is a diagram illustrating the state where an electronic device displays an image on a display according to an embodiment.

Referring to FIG. 5B, according to an embodiment, the electronic device 301 (e.g., the electronic device 301 in FIG. 3A) may obtain a third image using the first camera 310 (e.g., the first camera 310 in FIG. 3A). According to an embodiment, the electronic device 301 may obtain a fourth image using the second camera 330 (e.g., the second camera 330 in FIG. 3A). According to an embodiment, the electronic device 301 may obtain a fifth image using the third camera 340 (e.g., the third camera 340 in FIG. 3A). According to an embodiment, the angle of view of the first camera 310, the angle of view of the second camera 330, and the angle of view of the third camera 340 may be different from each other. According to an embodiment, the third image, fourth image, and fifth image may include a preview image.

According to an embodiment, the electronic device 301 may display a plurality of images obtained through the first camera 310, the second camera 330, and the third camera 340 in a plurality of areas 520, 530, and 540 of the display 360 (e.g., the display 360 in FIG. 3A). According to an embodiment, the electronic device 301 may display at least a portion of the third image in a second area 520. According to an embodiment, the electronic device 301 may display at least a portion of the fourth image in a third area 530. According to an embodiment, the electronic device 301 may display at least a portion of the fifth image in a fourth area 540. For example, the second area 520 may include an upper area among the plurality of areas. For example, the fourth area 540 may include a lower area among the plurality of areas. For example, the third area 530 may include a central area among the plurality of areas.

According to an embodiment, the electronic device 301 may apply a first current to the first driving unit 312 (e.g., the first driving unit 312 in FIG. 3A) using a pulse width modulation (PWM) driving method such that the first camera 310 moves while at least a portion of the third image is being displayed in the second area 520 of the display 360.

According to an embodiment, the electronic device 301 may apply a second current to the second driving unit 332 (e.g., the second driving unit 332 in FIG. 3A) using a linear driving method such that the second camera 330 moves while at least a portion of the fourth image is being displayed in the third area 530 of the display 360.

According to an embodiment, the electronic device 301 may apply a third current to the third driving unit 342 (e.g., the third driving unit 342 in FIG. 3A) using a pulse width modulation (PWM) driving method such that third camera 340 moves while at least a portion of the fifth image is being displayed in the fourth area 540 of the display 360.

According to an embodiment, the electronic device 301 may display at least a part of the fourth image in the third area 530 and display at least a portion of the third image in the second area 520 and the fourth area 540. According to an embodiment, the electronic device 301 may display at least a portion of the fourth image in the third area 530 and display at least a portion of the fifth image in the second area 520 and the fourth area 540.

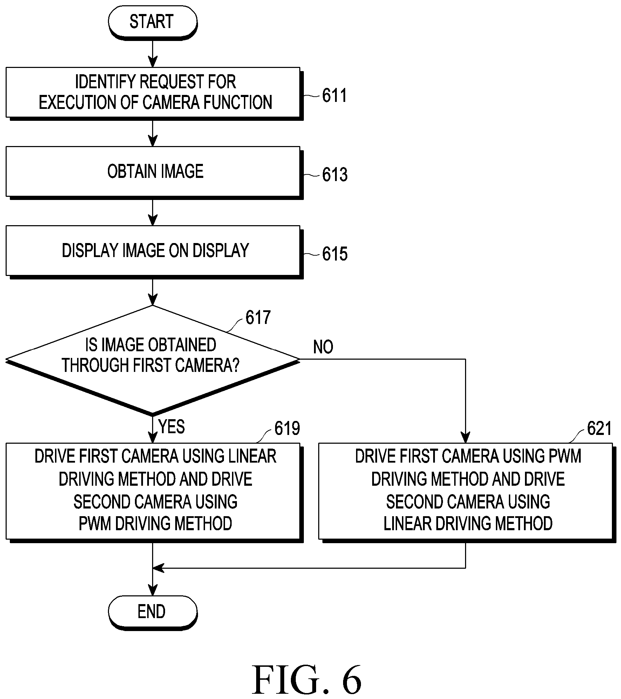

FIG. 6 is a flowchart illustrating an operation in which the electronic device drives the first camera and the second camera according to an embodiment.

In the following embodiment, respective operations may be performed in sequence, but are not necessarily performed in sequence. For example, the sequences of the respective operations may vary, and at least two operations may be performed in parallel.

According to an embodiment, operations 611 to 621 may be understood to be performed by the processor (e.g., the processor 320 in FIG. 3A) of the electronic device (e.g., the electronic device 301 in FIG. 3A).

Referring to FIG. 6, according to an embodiment, in operation 611, the electronic device 301 (e.g., the electronic device 301 in FIG. 3A) may identify a request for execution of a camera function. According to an embodiment, a request for execution of a camera function may include a request to obtain an image using the first camera 310 (e.g., the first camera 310 in FIG. 3A) or the second camera 330 (e.g., the second camera 330 in FIG. 3A) and display the image through a display 360 (e.g., the display 360 in FIG. 3A). According to an embodiment, if an application related to the camera is executed and if an image is captured, the electronic device 301 may identify that there is a request for execution of the camera function.

According to an embodiment, the electronic device 301 may obtain an image in operation 613. For example, the image may include a preview image.

According to an embodiment, the electronic device 301 may display the image through the display 360 (e.g., the display 360 in FIG. 3A) in operation 615.

According to an embodiment, in operation 617, the electronic device 301 may identify whether or not the image has been obtained through the first camera 310 (e.g., the first camera 310 in FIG. 3A).

According to an embodiment, if the image is identified to be obtained through the first camera 310 ("YES" in operation 617), the electronic device 301, in operation 619, may drive the first camera 310 using a linear driving method and drive the second camera 330 (e.g., the second camera 330 in FIG. 3A) using a pulse width modulation (PWM) driving method. According to an embodiment, the operation of the electronic device 301 to drive the first camera 310 may include an operation in which the electronic device 301 moves the position of the first driving unit 312 (e.g., the first driving unit 312 in FIG. 3A). For example, the electronic device 301 may move the position of the first magnet 315 (e.g., the first magnet 315 in FIG. 3A) or the first coil 314 (e.g., the first coil 314 in FIG. 3A). According to an embodiment, the operation of the electronic device 301 to drive the second camera 330 may include an operation in which the electronic device 301 moves the position of the second driving unit 332 (e.g., the second driving unit 332 in FIG. 3A). For example, the electronic device 301 may move the position of the second magnet 335 (e.g., the second magnet 335 in FIG. 3A) or a second coil 334. For example, the PWM driving method may include a method in which the electronic device 301 performs control to adjust the duty ratio of turning on or off the driving power source and applies the voltage or current output from the driving power source to the driving unit (e.g., the coil). For example, the current applied to the driving unit by the PWM driving method may include pulse waves. For example, the linear driving method may include a method in which the electronic device 301 adjusts the amplitude of the voltage or current output from the driving power source and applies the same to the driving unit.

According to an embodiment, if the image is identified to be obtained through the second camera 330 ("NO" in operation 617), the electronic device 301, in operation 621, may drive the first camera 310 using the PWM driving method and drive the second camera 330 using the linear driving method.

According to an embodiment, the electronic device 301 may apply a first current to the first driving unit 312 (e.g., the first driving unit 312 in FIG. 3A) included in the first camera 310 to drive the first camera 310. According to an embodiment, the electronic device 301 may apply a second current to the second driving unit 332 (e.g., the second driving unit 332 in FIG. 3A) included in the second camera 330 to drive the second camera 330. According to an embodiment, the electronic device 301 may perform an optical image stabilization (OIS) function to apply a first current to the first driving unit 312, thereby moving the first camera 310 in a direction perpendicular to the optical axis. According to an embodiment, the electronic device 301 may perform an optical image stabilization (OIS) function to apply a second current to the second driving unit 332, thereby moving the second camera 330 in a direction perpendicular to the optical axis. According to an embodiment, the electronic device 301 may perform an auto-focus (AF) function to apply a first current to the first driving unit 312, thereby moving the first lens assembly 311 (e.g., the first lens assembly 311 in FIG. 3A) in the optical axis direction. According to an embodiment, the electronic device 301 may perform an auto-focus (AF) function to apply a second current to the second driving unit 332, thereby moving the second lens assembly 331 (e.g., the second lens assembly 331 in FIG. 3A) in the optical axis direction.

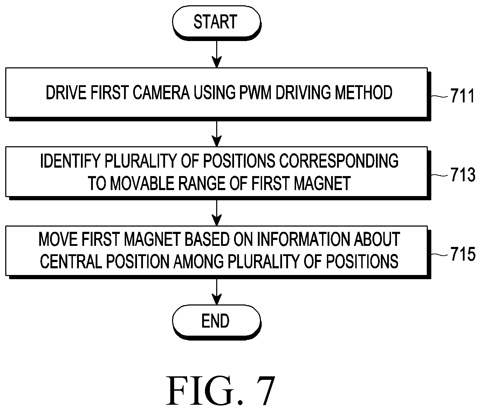

FIG. 7 is a flowchart illustrating an operation in which the electronic device moves the first camera, based on current consumed by the first driving unit, according to an embodiment.

In the following embodiment, respective operations may be performed in sequence, but are not necessarily performed in sequence. For example, the sequences of the respective operations may vary, and at least two operations may be performed in parallel.

According to an embodiment, operations 711 to 715 may be understood to be performed by the processor (e.g., the processor 320 in FIG. 3A) of the electronic device (e.g., the electronic device 301 in FIG. 3A).

Referring to FIG. 7, according to an embodiment, in operation 711, the electronic device 301 (e.g., the electronic device 301 in FIG. 3A) may drive the first camera 310 (e.g., the first camera 310 in FIG. 3A) using a pulse width modulation (PWM) driving method. According to an embodiment, the electronic device 301 may apply a first current to the first coil 314 (e.g., the first coil 314 in FIG. 3A) to drive the first camera 310.

According to an embodiment, in operation 713, the electronic device 301 may identify a plurality of positions corresponding to the movable range of the first magnet 315 (e.g., the first magnet 315 in FIG. 3A) using the first sensor 313 (e.g., the first sensor 313 in FIG. 3A). According to an embodiment, the electronic device 301 may identify a plurality of positions corresponding to the movable range of the first magnet 315, which are pre-stored in memory 350 (e.g., the memory 350 in FIG. 3A). Depending on implementation, the electronic device 301 may also identify a plurality of positions corresponding to the movable range of the first coil 314 using the first sensor 313. According to an embodiment, the electronic device 301 may identify a plurality of pre-stored positions corresponding to the movable range of the first coil 314.

According to an embodiment, in operation 715, the electronic device 301 may move the first magnet 315, based on information about a central position among the plurality of positions corresponding to the movable range of the first magnet 315. According to an embodiment, the electronic device 301 may move the first magnet 315 to the central position among the plurality of positions. According to an embodiment, the electronic device 301 may move the first lens assembly 311 (e.g., the first lens assembly 311 in FIG. 3A), based on the movement of the first magnet 315. Depending on implementation, the electronic device 301 may move the first coil 314, based on the information about a central position among the plurality of positions corresponding to the movable range of the first coil 314. According to an embodiment, the electronic device 301 may move the first coil 314 to the central position among the plurality of positions.

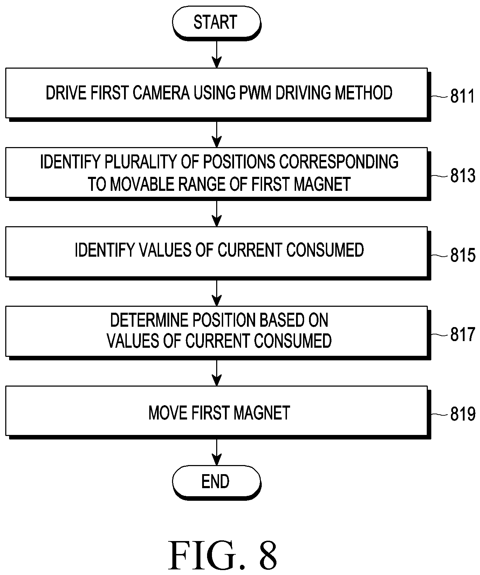

FIG. 8 is a flowchart illustrating an operation in which the electronic device moves the first camera, based on current consumed by the first driving unit, according to an embodiment.

In the following embodiment, respective operations may be performed in sequence, but are not necessarily performed in sequence. For example, the sequences of the respective operations may vary, and at least two operations may be performed in parallel.

According to an embodiment, operations 811 to 819 may be understood to be performed by the processor (e.g., the processor 320 in FIG. 3A) of the electronic device (e.g., the electronic device 301 in FIG. 3A).

Referring to FIG. 8, according to an embodiment, in operation 811, the electronic device 301 (e.g., the electronic device 301 in FIG. 3A) may drive the first camera 310 (e.g., the first camera 310 in FIG. 3A) using a pulse width modulation (PWM) driving method. According to an embodiment, the electronic device 301 may apply a first current to the first coil 314 (e.g., the first coil 314 in FIG. 3A) to drive the first camera 310.

According to an embodiment, in operation 813, the electronic device 301 may identify a plurality of positions corresponding to the movable range of the first magnet 315 (e.g., the first magnet 315 in FIG. 3A) using the first sensor 313 (e.g., the first sensor 313 in FIG. 3A). According to an embodiment, the electronic device 301 may also identify a plurality of positions corresponding to the movable range of the first coil 314 using the first sensor 313.

According to an embodiment, in operation 815, the electronic device 301 may identify a plurality of values of current consumed by the first driving unit 312 when the first magnet 315 moves between a plurality of positions. According to an embodiment, the electronic device 301 may identify a plurality of values of current consumed by the first driving unit 312 when the first coil 314 moves between a plurality of positions.

According to an embodiment, the electronic device 301 may determine a position to which the first magnet 315 is to move based on the consumption current values in operation 817. For example, the electronic device 301 may determine the position of the first magnet 315 where the consumption current value is the minimum, among the plurality of consumption current values, to be the position to which the first magnet 315 is to move. For example, the electronic device 301 may determine a position corresponding to a specific consumption current value among the plurality of consumption current values to be the position to which the first magnet 315 is to move.

According to an embodiment, the electronic device 301 may determine a position to which the first coil 314 is to move based on the consumption current values. For example, the electronic device 301 may determine the position where the consumption current value is minimized to be the position to which the first coil 314 is to move. For example, the electronic device 301 may determine a position corresponding to a specific consumption current value among the plurality of consumption current values to be the position to which the first coil 314 is to move.

According to an embodiment, in operation 819, the electronic device 301 may move the first magnet 315 to the determined position, thereby moving the first lens assembly 311 (e.g., the first lens assembly 311 in FIG. 3A). According to an embodiment, the electronic device 301 may move the first coil 314 to the determined position, thereby moving the first lens assembly 311.

Depending on implementation, according to an embodiment, a lookup table representing the relationship between the plurality of positions of the first magnet 315 and the consumption current values may be pre-stored in the memory 350 (e.g., the memory 350 in FIG. 3A). According to an embodiment, the electronic device 301 may move the first magnet 315 to a position corresponding to a specific consumption current value among the plurality of consumption current values using the look-up table. According to an embodiment, the electronic device 301 may move the first magnet 315 to a position where the consumption current value is minimized using the look-up table. According to an embodiment, a lookup table representing the relationship between the plurality of positions of the first coil 314 and the consumption current values may be pre-stored in the memory 350 (e.g., the memory 350 in FIG. 3A). According to an embodiment, the electronic device 301 may move the first coil 314 to a position corresponding to a specific consumption current value among the plurality of consumption current values using the look-up table. According to an embodiment, the electronic device 301 may move the first coil 314 to a position where the consumption current value is minimized using the look-up table.

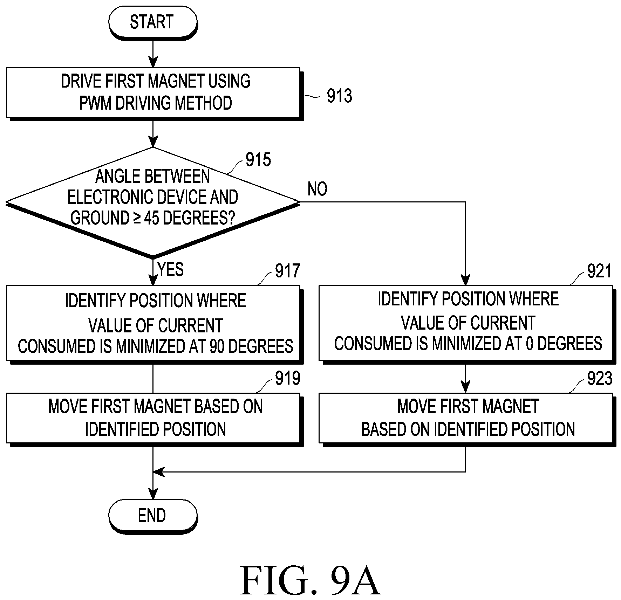

FIG. 9A is a flowchart illustrating an operation in which the electronic device moves the first camera, based on an angle with the ground, according to an embodiment.

In the following embodiment, respective operations may be performed in sequence, but are not necessarily performed in sequence. For example, the sequences of the respective operations may vary, and at least two operations may be performed in parallel.

According to an embodiment, operations 913 to 923 may be understood to be performed by the processor (e.g., the processor 320 in FIG. 3A) of the electronic device (e.g., the electronic device 301 in FIG. 3A).

Referring to FIG. 9A, according to an embodiment, in operation 913, the electronic device 301 (e.g., the electronic device 301 in FIG. 3A) may drive the first camera 310 (e.g., the first camera 310 in FIG. 3A) using a pulse width modulation (PWM) driving method. According to an embodiment, the electronic device 301 may apply a first current to the first coil 314 (e.g., the first coil 314 in FIG. 3A) to drive the first camera 310.

According to an embodiment, in operation 915, the electronic device 301 may identify an angle formed between the electronic device 301 and the ground, and identify whether the angle formed between the electronic device 301 and the ground is equal to or greater than about 45 degrees. For example, the electronic device 301 may identify the angle formed between the electronic device 301 and the ground through a sensor (not shown). For example, the sensor may include an inertial sensor.

According to an embodiment, if the angle formed between the electronic device 301 and the ground is identified to be equal to or greater than about 45 degrees ("YES" in operation 915), the electronic device 301, in operation 917, may identify the position of the first magnet 315 where the value of current consumed by the first driving unit 312 (e.g., the first driving unit 312 in FIG. 3A) is minimized when the angle formed between the electronic device 301 and the ground is about 90 degrees. According to an embodiment, a lookup table representing the relationship of angles formed between the electronic device 301 and the ground, consumption current values, and a plurality of positions of the first magnet 315 may be pre-stored in the memory (e.g., the memory 350 in FIG. 3A). According to an embodiment, if the angle formed between the electronic device 301 and the ground is about 90 degrees, the electronic device 301 may identify, using the look-up table, the position of the first magnet 315 where the value of current consumed by the first driving unit 312 is minimized.

According to an embodiment, the electronic device 301 may identify the position of the first coil 314 where the value of current consumed by the first driving unit 312 is minimized.

According to an embodiment, in operation 919, the electronic device 301 may move the first magnet 315, based on the identified position. According to an embodiment, the electronic device 301 may move the first magnet 315 to a position where consumption current is minimized when the angle formed between the electronic device 301 and the ground is about 90 degrees. According to an embodiment, the electronic device 301 may move the first lens assembly 311, based on the movement of the first magnet 315. According to an embodiment, the electronic device 301 may move the first coil 314 to a position where consumption current is minimized when the angle formed between the electronic device 301 and the ground is about 90 degrees. According to an embodiment, the electronic device 301 may move the first lens assembly 311, based on the movement of the first coil 314.

According to an embodiment, if the angle formed between the electronic device 301 and the ground is identified not to be equal to or greater than about 45 degrees ("NO" in operation 915), the electronic device 301, in operation 921, may identify the position of the first magnet 315 where the current consumed by the first driving unit 312 is minimized when the angle formed between the electronic device 301 and the ground is about 0 degrees. According to an embodiment, the electronic device 301 may identify, using the look-up table, the position of the first magnet 315 where consumption current is minimized when the angle formed between the electronic device 301 and the ground is 0 degrees. According to an embodiment, the electronic device 301 may identify the position of the first coil 314 where current consumed by the first driving unit 312 is minimized when the angle formed between the electronic device 301 and the ground is about 0 degrees. According to an embodiment, the electronic device 301 may include identify, using the look-up table, the position of the first coil 314 where the consumption current is minimized when the angle formed between the electronic device 301 and the ground is 0 degrees.

According to an embodiment, in operation 923, the electronic device 301 may move the first magnet 315, based on the identified position. According to an embodiment, the electronic device 301 may move the first magnet 315 to a position where the consumption of the first current is minimized when the angle formed between the electronic device 301 and the ground is about 0 degrees. According to an embodiment, the electronic device 301 may move the first lens assembly 311, based on the movement of the first magnet 315. According to an embodiment, the electronic device 301 may move the first coil 314 to a position where the consumption of the first current is minimized when the angle formed between the electronic device 301 and the ground is about 0 degrees. According to an embodiment, the electronic device 301 may move the first lens assembly 311, based on the movement of the first coil 314.

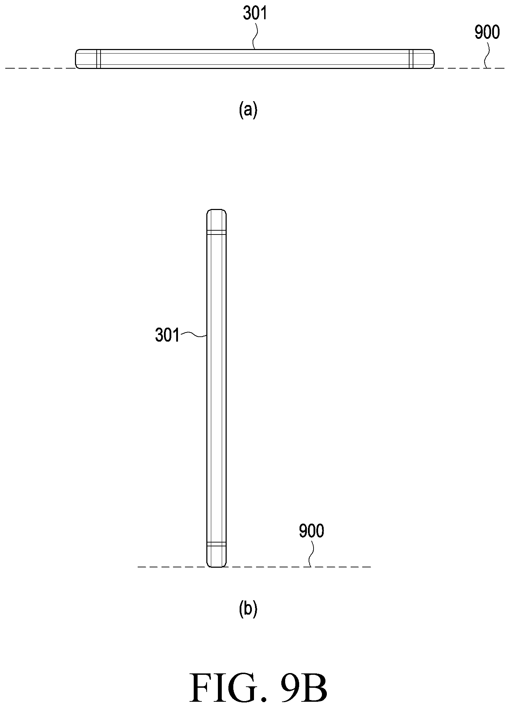

FIG. 9B is a diagram illustrating the angle between the electronic device and the ground according to an embodiment.

Referring to (a) in FIG. 9B, according to an embodiment, the electronic device 301 (e.g., the electronic device 301 in FIG. 3A) may identify the angle formed between the ground 900 and the electronic device 301. According to an embodiment, the electronic device 301 may identify that the angle formed between the ground 900 and the electronic device 301 is about 0 degrees.

Referring to (b) in FIG. 9B, according to an embodiment, the electronic device 301 may identify that the angle formed between the ground 900 and the electronic device 301 is about 90 degrees.

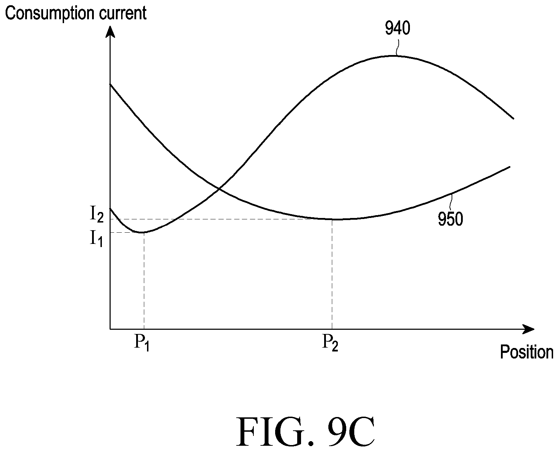

FIG. 9C is a diagram illustrating a graph of the position of the first magnet and the value of current consumed by the first driving unit corresponding to the position of the first magnet according to an embodiment.

Referring to FIG. 9C, according to an embodiment, the x-axis of the graph may indicate the position of the first magnet 315 (e.g., the first magnet 315 in FIG. 3A), and the y-axis of the graph may indicate the value of current consumed by the first driving unit 312 (e.g., the first driving unit 312 in FIG. 3A).

According to an embodiment, the electronic device 301 may move the position of the first magnet 315 and identify the consumption current values 940 according to the position movement of the first magnet 315. According to an embodiment, the consumption current values 940 according to the movement of the first magnet 315 may be pre-stored in the memory 350 (e.g., the memory 350 in FIG. 3A). For example, the consumption current values 940 according to the movement of the first magnet 315 may represent the consumption current values when the angle formed between the electronic device 301 and the ground (900 in FIG. 9B) is about 90 degrees.

According to an embodiment, when the first camera 310 (e.g., the first camera 310 in FIG. 3A) is driven by a PWM driving method, the electronic device 301 may move the first magnet 315 to a position corresponding to a specific value among the consumption current values 940 according to the movement of the first magnet 315. For example, the electronic device 301 may move the first magnet 315 to a position P1 where the consumption current value is the minimum I1, among the consumption current values 940 according to the movement of the first magnet 315.

For example, the consumption current values 950 according to the movement of the first magnet 315 may represent the consumption current values when the angle formed between the electronic device 301 and the ground 900 is about 0 degrees.

According to an embodiment, when the first camera 310 is driven by a PWM driving method, the electronic device 301 may move the first magnet 315 to a position corresponding to a specific value among the consumption current values 950 according to the movement of the first magnet 315. For example, the electronic device 301 may move the first magnet 315 to a position P2 where the consumption current value is the minimum I2, among the consumption current values 950 according to the movement of the first magnet 315.

However, these are examples, and the electronic device 301 may also identify consumption current values according to the movement of the first coil 314 (e.g., the first coil 314 in FIG. 3A) and the position of the first coil 314 based on the consumption current values. According to an embodiment, the electronic device 301 may move the first coil 314, based on the identified first coil 314.

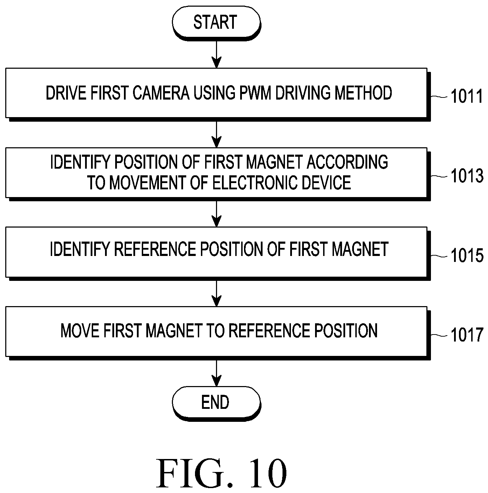

FIG. 10 is a flowchart illustrating an operation in which the electronic device moves the first camera, based on the position of the first magnet identified in the state in which there is no movement of the first camera, according to an embodiment.

In the following embodiment, respective operations may be performed in sequence, but are not necessarily performed in sequence. For example, the sequences of the respective operations may vary, and at least two operations may be performed in parallel.

According to an embodiment, operations 1011 to 1017 may be understood to be performed by the processor (e.g., the processor 320 in FIG. 3A) of the electronic device (e.g., the electronic device 301 in FIG. 3A).

Referring to FIG. 10, in operation 1011, the electronic device 301 (e.g., the electronic device 301 in FIG. 3A) may drive the first camera 310 (e.g., the first camera 310 in FIG. 3A) using a pulse width modulation (PWM) driving method.

According to an embodiment, in operation 1013, the electronic device 301 using may identify a first position of the first magnet 315 (e.g., the first magnet 315 in FIG. 3A) according to the movement of the electronic device 301 using the first sensor 313 (e.g., the first sensor 313 in FIG. 3A). According to an embodiment, the electronic device 301 may identify a second position of the first coil 314.

According to an embodiment, in operation 1015, the electronic device 301 may identify the reference position of the first magnet 315. For example, the standard position may include a pre-designated position. For example, the reference position of the first magnet 315 may include the position of the first magnet 315 identified when there is no movement of the electronic device 301.

For example, the reference position of the first magnet 315 may include the position of the first magnet 315 identified when the first lens assembly 311 (e.g., the first lens assembly 311 in FIG. 3A) and the first image sensor 316 (e.g., the first image sensor 316 in FIG. 3A) are aligned about the optical axis (e.g., the z-axis in FIG. 4A) indicating the central axis of the first lens assembly 311. According to an embodiment, the electronic device 301 may perform an OIS function to move the first camera 310 in a direction perpendicular to the optical axis. However, this is an example, and the function of the first camera 310 may not be limited thereto.

For example, the reference position of the first magnet 315 may include a position determined based on the focal distance (e.g., about 2m or more) of the first lens assembly 311. According to an embodiment, the electronic device 301 may perform an AF function to move the first camera 310 in the optical axis direction. However, this is an example, and the function of the first camera 310 may not be limited thereto.

According to an embodiment, the electronic device 301 may also identify the reference position of the first coil 314. For example, the reference position of the first coil 314 may include the position of the first coil 314 identified when there is no movement of the electronic device 301. For example, the reference position of the first coil 314 may include the position of the first coil 314 identified when the first lens assembly 311 and the first image sensor 316 (e.g., the first image sensor 316 in FIG. 3A) are aligned about the optical axis (e.g., the z-axis in FIG. 4A) indicating the central axis of the first lens assembly 311. For example, the reference position of the first coil 314 may include a position determined based on the focal distance (e.g., about 2m or more) of the first lens assembly 311.

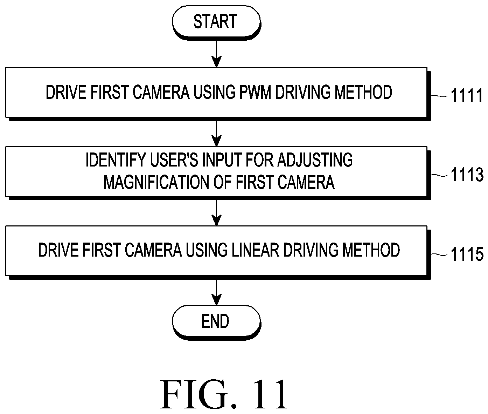

According to an embodiment, the electronic device 301 may move the first magnet 315 to the reference position in operation 1017. According to an embodiment, the electronic device 301 may move the first magnet 315 from a first position to the reference position of the first magnet 315. According to an embodiment, the electronic device 301 may move the first coil 314 from a second position to the reference position of the first coil 314. FIG. 11 is a flowchart illustrating an operation in which the electronic device drives the first camera if the magnification for the first camera is adjusted according to an embodiment.

In the following embodiment, respective operations may be performed in sequence, but are not necessarily performed in sequence. For example, the sequences of the respective operations may vary, and at least two operations may be performed in parallel.

According to an embodiment, operations 1111 to 1115 may be understood to be performed by the processor (e.g., the processor 320 in FIG. 3A) of the electronic device (e.g., the electronic device 301 in FIG. 3A).

Referring to FIG. 11, according to an embodiment, in operation 1111, the electronic device 301 (e.g., the electronic device 301 in FIG. 3A) may drive the first camera 310 (e.g., the first camera 310 in FIG. 3A) using a pulse width modulation (PWM) driving method.

According to an embodiment, in operation 1113, the electronic device 301 may identify a user's input for adjusting the magnification of the first camera 310. According to an embodiment, the electronic device 301 may identify a user's input for increasing or reducing the magnification of the first camera 310.

According to an embodiment, in operation 1115, the electronic device 301 may drive the first camera 310 using a linear driving method. According to an embodiment, the electronic device 301 may switch the driving method of the first camera 310 from the pulse width modulation (PWM) driving method to at linear driving method, based on the user's input.

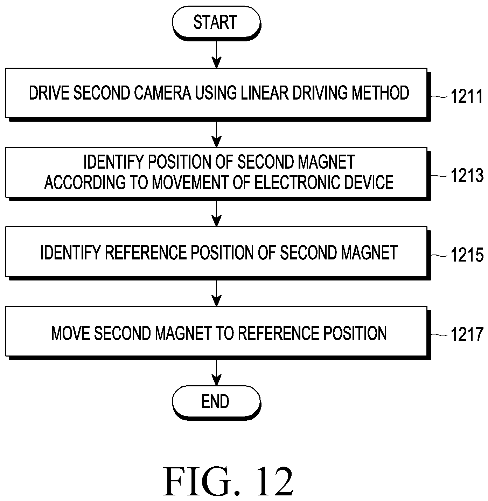

FIG. 12 is a flowchart illustrating an operation in which the electronic device drives the second camera according to an embodiment.

In the following embodiment, respective operations may be performed in sequence, but are not necessarily performed in sequence. For example, the sequences of the respective operations may vary, and at least two operations may be performed in parallel.

According to an embodiment, operations 1211 to 1217 may be understood to be performed by the processor (e.g., the processor 320 in FIG. 3A) of the electronic device (e.g., the electronic device 301 in FIG. 3A).

Referring to FIG. 12, according to an embodiment, in operation 1211, the electronic device 301 (e.g., the electronic device 301 in FIG. 3A) may drive the second camera 330 (e.g., the second camera 330 in FIG. 3A) using a linear driving method. According to an embodiment, the electronic device 301 may apply a second current to the second coil 334 (e.g., the second coil 334 in FIG. 3A) to drive the second camera 330.

According to an embodiment, in operation 1213, the electronic device 301 may identify a movement of the electronic device 301 through the second sensor 333 (e.g., the second sensor 333 in FIG. 3A) and identify a third position of the second magnet 335 (e.g., the second magnet 335 in FIG. 3A) according to the movement of the electronic device 301.

According to an embodiment, in operation 1215, the electronic device 301 may identify the reference position of the second magnet 335. For example, the reference position of the second magnet 335 may include the position of the second magnet 335 identified through the second sensor 333 when there is no movement of the electronic device 301.

For example, the reference position of the second magnet 335 may include the position of the second magnet 335 identified when the second lens assembly 331 (e.g., the second lens assembly 331 in FIG. 3A) and the second image sensor 336 (e.g., second image sensor 336 in FIG. 3A) are aligned about the optical axis (e.g., the z-axis in FIG. 4A) indicating the central axis of the second lens assembly 331. According to an embodiment, the electronic device 301 may perform an OIS function to move the second camera 330 in a direction perpendicular to the optical axis. However, this is an example, and the function of the second camera 330 may not be limited thereto.

For example, the reference position of the second magnet 335 may include a position determined based on the focal length (e.g., about 2m or more) of the second lens assembly 331. According to an embodiment, the electronic device 301 may perform an AF function to move the second camera 330 in the optical axis direction. However, this is an example, and the function of the second camera 330 may not be limited thereto.

According to an embodiment, in operation 1217, the electronic device 301 may move the second magnet 335 to the reference position.

However, this is an example, and in embodiments of the disclosure, the electronic device 301 may move the second coil 334 (e.g., the second coil 334 in FIG. 3A) to the reference position of the second coil 334. The description of the first coil 314 made with reference to FIG. 11 may be applied to the reference position of the second coil 334 in the same manner.

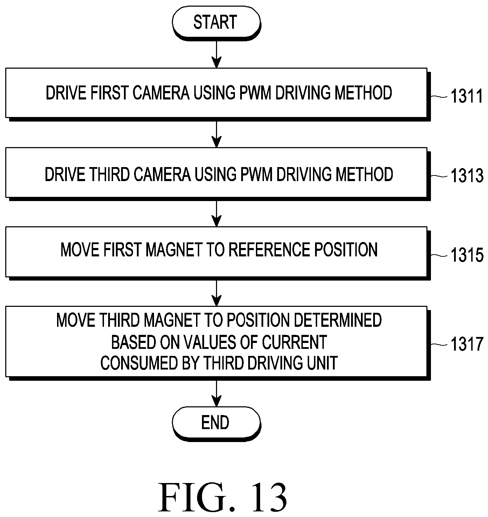

FIG. 13 is a flowchart illustrating an operation in which the electronic device drives the third camera according to an embodiment.

In the following embodiment, respective operations may be performed in sequence, but are not necessarily performed in sequence. For example, the sequences of the respective operations may vary, and at least two operations may be performed in parallel.

According to an embodiment, operations 1311 to 1317 may be understood to be performed by the processor (e.g., the processor 320 in FIG. 3A) of the electronic device (e.g., the electronic device 301 in FIG. 3A).

Referring to FIG. 13, according to an embodiment, in operation 1311, the electronic device 301 (e.g., the electronic device 301 in FIG. 3A) may drive the first camera 310 (e.g., the first camera 310 in FIG. 3A) using a pulse width modulation (PWM) driving method.

According to an embodiment, in operation 1313, the electronic device 301 may drive the third camera 340 (e.g., the third camera 340 in FIG. 3A) using a pulse width modulation (PWM) driving method. According to an embodiment, the angle of view of the first camera 310 may be different from the angle of view of the third camera 340. For example, the angle of view of the third camera 340 may be greater than the angle of view of the first camera 310.

According to an embodiment, in operation 1315, the electronic device 301 may move the first magnet 315 (e.g., the first magnet 315 in FIG. 3A) to the reference position of the first magnet 315. For example, the reference position may include the position of the first magnet 315 before the electronic device 301 begins to move. For example, the reference position may include a position obtained through the first sensor 313 (e.g., the first sensor 313 in FIG. 3A) before the electronic device 301 begins to move.

For example, the reference position of the first magnet 315 may include the position of the first magnet 315 identified when the first lens assembly 311 (e.g., the first lens assembly 311 in FIG. 3A) and the first image sensor 316 (e.g., the first image sensor 316 in FIG. 3A) are aligned about the optical axis (e.g., the z-axis in FIG. 4A) indicating the central axis of the first lens assembly 311. According to an embodiment, the electronic device 301 may perform an OIS function to move the first camera 310 in a direction perpendicular to the optical axis. However, this is an example, and the function of the first camera 310 may not be limited thereto.

For example, the reference position of the first magnet 315 may include a position determined based on the focal distance (e.g., about 2m or more) of the first lens assembly 311. According to an embodiment, the electronic device 301 may perform an AF function to move the first camera 310 in the optical axis direction. However, this is an example, and the function of the first camera 310 may not be limited thereto. According to an embodiment, in operation 1317, the electronic device 301 may move the third magnet 345 (e.g., the third magnet 345 in FIG. 3A) to a position determined based on the values of current consumed by the third driving unit 342 (e.g., the third driving unit 342 in FIG. 3A). For example, the electronic device 301 may move the third magnet 345 to a position where the value of current consumed by the third driving unit 342 is the minimum, among a plurality of positions corresponding to the movable range of the third magnet 345. For example, the electronic device 301 may move the third magnet 345 to the position of the third magnet 345 where the value of current consumed by the third driving unit 342 is minimized at a specific angle (e.g., about 0 degrees or about 90 degrees) formed between the electronic device 301 and the ground.

However, this is an example, and in embodiments of the disclosure, the electronic device 301 may move the first coil 314 (e.g., the first coil 314 in FIG. 3A) and the third coil 344 (e.g., the third coil 344 in FIG. 3A).

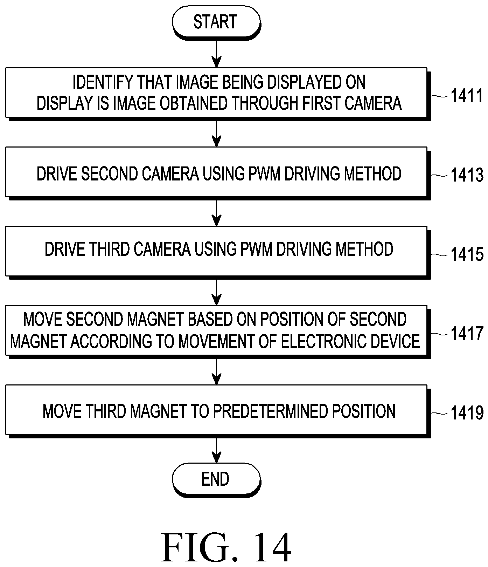

FIG. 14 is a flowchart illustrating an operation in which the electronic device drives the first camera, the second camera, and the third camera according to an embodiment.

Referring to FIG. 14, according to an embodiment, the angle of view of the first camera 310 (e.g., the first camera 310 in FIG. 3A), the angle of view of the second camera 330 (e.g., the second camera 330 in FIG. 3A), and the angle of view of the third camera 340 (e.g., the third camera 340 in FIG. 3A) may be different from each other. For example, the first camera 310 may be a tele-camera. For example, the second camera 330 may be a wide camera. For example, the third camera 340 may be an ultra-wide camera. However, these are examples, and embodiments of the disclosure may not be limited thereto.

In the following embodiment, respective operations may be performed in sequence, but are not necessarily performed in sequence. For example, the sequences of the respective operations may vary, and at least two operations may be performed in parallel.

According to an embodiment, in operation 1411, the electronic device 301 (e.g., the electronic device 301 in FIG. 3A) may identify whether or not the image being displayed on the display 360 (e.g., the display 360 in FIG. 3A) is an image obtained through the first camera 310. According to an embodiment, the electronic device 301 may drive the first camera 310 using a linear driving method.

According to an embodiment, in operation 1413, the electronic device 301 may drive the second camera 330 using a pulse width modulation (PWM) driving method.

According to an embodiment, in operation 1415, the electronic device 301 may drive the third camera 340 using a pulse width modulation (PWM) driving method.

According to an embodiment, in operation 1417, the electronic device 301, based on the position of the second magnet 335 (e.g., the second magnet 335 in FIG. 3A) according to the movement of the electronic device 301, may move the second magnet 335.

According to an embodiment, the electronic device 301 may identify the position of the second magnet 335 according to the movement of the electronic device 301. According to an embodiment, the electronic device 301 may identify the position of the second coil 334 according to the movement of the electronic device 301.

According to an embodiment, the electronic device 301 may identify the reference position of the second magnet 335. According to an embodiment, the electronic device 301 may identify the position of the second coil 334.

For example, the reference position of the second magnet 335 may include the position of the second magnet 335 identified when there is no movement of the electronic device 301. For example, the reference position of the second coil 334 may include the position of the second coil 334 identified when there is no movement of the electronic device 301.

According to an embodiment, in operation 1419, the electronic device 301 may move the third magnet 345 (e.g., the third magnet 345 in FIG. 3A) from the current position identified through the third sensor 343 (e.g., the third sensor 343 in FIG. 3A) to a predetermined position.

According to an embodiment, the electronic device 301, using the third sensor 343, may identify a plurality of positions corresponding to the movable range of the third magnet 345 or the third coil 344 (e.g., the third coil 344 in FIG. 3A). According to an embodiment, the electronic device 301 may identify a plurality of values of current consumed by the third driving unit 342 (e.g., the third driving unit 342 in FIG. 3A) when the third magnet 345 or the third coil 344 moves between a plurality of positions. According to an embodiment, the electronic device 301 may move the third magnet 345 or the third coil 344, based on the plurality of consumption current values.

According to an embodiment, the electronic device 301 may determine a position where the consumption current value is minimized to be the position to which the third coil 344 or the third magnet 345 is to move.

According to an embodiment, the electronic device 301 may identify information about the central position among the plurality of positions corresponding to the movable range of the third magnet 345. According to an embodiment, the electronic device 301 may move the third magnet 345 to the central position. According to an embodiment, the electronic device 301 may identify information about the central position among the plurality of positions corresponding to the movable range of the third coil 344. According to an embodiment, the electronic device 301 may move the third coil 344 to the central position.

According to an embodiment, the electronic device 301 may identify the position of the third magnet 345 identified when the third image sensor 346 (e.g., the third image sensor 346 in FIG. 3A) and the third lens assembly 341 (e.g., the third lens assembly 341 in FIG. 3A) are aligned about the optical axis. According to an embodiment, the electronic device 301 may move the third magnet 345 to the identified position of the third magnet 345. According to an embodiment, the electronic device 301 may identify the position of the third coil 344 identified when the third image sensor 346 and the third lens assembly 341 are aligned about the optical axis. According to an embodiment, the electronic device 301 may move the third coil 344 to the identified position of the third coil 344.

According to an embodiment, the electronic device 301 may include a display 360, a first camera 310 including a first lens assembly 311 and a first driving unit 312, a second camera 330 including a second lens assembly 331 and a second driving unit 332, at least one processor 320, and memory 350 storing instructions.

According to an embodiment, the electronic device 301, based on a request for execution of a camera function, may display, through the display 360, a preview image obtained using the second camera 330.

According to an embodiment, the electronic device 301 may drive the first driving unit using a pulse width modulation (PWM) driving method during at least a portion of a time period in which the preview image is obtained through the second camera.

According to an embodiment, the electronic device 301 may drive the second driving unit 332 using a linear driving method during at least a portion of a time period in which the preview image is obtained through the second camera.

According to an embodiment, in the electronic device 301, the first driving unit 312 may include a first magnet 315 and a first coil 314.

According to an embodiment, the electronic device 301 may apply a first current to the first coil 314 to move any one of the first magnet 315 or the first coil 314, which is set to move, to a first designated position such that the first lens assembly 311 moves to the first designated position.

According to an embodiment, the electronic device 301 may identify a plurality of positions corresponding to a movable range for any one of the first magnet 315 or the first coil 314, which is set to move.

According to an embodiment, the electronic device 301 may move the any one to a central position among the plurality of positions.

According to an embodiment, the electronic device 301 may identify values of current consumption by the first driving unit 312 when any one of the first magnet 315 or the first coil 314, which is set to move, moves between a plurality of positions.

According to an embodiment, the electronic device 301, based on the values of current consumption, may identify a position to which the any one is to move.

According to an embodiment, the electronic device 301 may identify a first position where a consumption current value among the plurality of values of current consumed by the first driving unit 312 is minimized.

According to an embodiment, the electronic device 301 may move the any one to the first position.

According to an embodiment, the electronic device 301 may identify an angle formed between the electronic device 301 and a ground.

According to an embodiment, the electronic device 301, based on the angle, may identify a position to which any one of the first magnet 315 or the first coil 314, which is set to move, is to move.

According to an embodiment, the electronic device 301, if a user's input for adjusting a magnification of the first camera 310 is identified, may drive the first driving unit using the linear driving method.

According to an embodiment, the electronic device 301, if a movement of the electronic device 301 is identified, may identify a first position of any one of the first magnet 315 or the first coil 314, which is set to move.

According to an embodiment, the electronic device 301 may move the any one from the first position to a second position, which has been identified when the electronic device does not move, of the one of the first magnet or the first coil.

According to an embodiment, the electronic device 301 may include a third camera 330 including a third lens assembly 341 and a third driving unit 342.

According to an embodiment, the angle of view of the third camera 330 of the electronic device 301 may be different from the angle of view of the first camera 310.

According to an embodiment, the third driving unit 342 of the electronic device 301 may include a third magnet 345 and a third coil 344.

According to an embodiment, the electronic device 301, based on identifying the image as being obtained through the second camera 330, may drive the third driving unit 342 using a pulse width modulation (PWM) driving method during at least a portion of a time period in which the image is displayed on the display 360.

According to an embodiment, the electronic device 301 may move the third magnet 345 such that the third lens assembly 341 moves to a third designated position.

According to an embodiment, the electronic device 301 may perform an optical image stabilization (OIS) function of applying a first current the first driving unit 312 and applying a second current to the second driving unit 332, thereby moving the first camera 310 and the second camera 320 in a direction perpendicular to the optical axis

According to an embodiment, the electronic device 301 may perform an auto-focus (AF) function of applying a first current the first driving unit 312 and applying a second current to the second driving unit 332, thereby moving the first camera 310 and the second camera 320 in the optical axis direction.

According to an embodiment, the electronic device 301 may display, through the display 360, a first preview image obtained through the first camera 310 or a second preview image obtained using the second camera 330.

According to an embodiment, the electronic device 301 may drive the first driving unit 312 using a pulse width modulation (PWM) driving method during a first time period in which the first preview image is displayed on the display 360.

According to an embodiment, the electronic device 301 may drive the second driving unit 332 using a linear driving method during a second time period in which the second preview image is displayed on the display 360.

According to an embodiment, a method of operating the electronic device 301 may include displaying, through the display 360, a preview image obtained using the second camera 330 included in the electronic device, based on a request for execution of a camera function.

According to an embodiment, the method of operating the electronic device 301 may include driving the first driving unit 312 using a pulse width modulation (PWM) driving method during at least a portion of a time period in which the preview image is obtained through the second camera.

According to an embodiment, the method of operating the electronic device may include driving the second driving unit 332 using a linear driving method during at least a portion of a time period in which the preview image is obtained through the second camera.

According to an embodiment, the method of operating the electronic device may include applying a first current to the first coil 314 to move the first magnet 315 to a first designated position such that the first lens assembly 311 moves to the first designated position.

According to an embodiment, the method of operating the electronic device 301 may include identifying a plurality of positions corresponding to a movable range for one of the first magnet 315 or the first coil 314, which is set to move.

According to an embodiment, the method of operating the electronic device 301 may include moving the one of the first magnet or the first coil to a central position among the plurality of positions.

According to an embodiment, the method of operating the electronic device 301 may include identifying values of current consumption by the first driving unit 312 when the one of the first magnet or the first coil moves between a plurality of positions.

According to an embodiment, the method of operating the electronic device 301 may include, based on the values of current consumption, identifying a position to which the first magnet is to move.

According to an embodiment, the method of operating the electronic device 301 may include identifying a first position where value of current consumption among the values of current consumption by the first driving unit 312 is minimized.

According to an embodiment, the method of operating the electronic device 301 may include moving the one of the first magnet or the first coil to the first position.

According to an embodiment, the method of operating the electronic device 301 may include identifying an angle formed between the electronic device and the ground.

According to an embodiment, the method of operating the electronic device 301 may include, based on the angle, identifying a position to which one of the first magnet 315 or the first coil 314, which is set to move, is to move.

According to an embodiment, the method of operating the electronic device 301 may include, if a user's input for adjusting a magnification of the first camera 310 is identified, driving the first camera 310 using the linear driving method.

According to an embodiment, the method of operating the electronic device 301 may include, if a movement of the electronic device 301 is identified, identifying a first position of one of the first magnet 315 or the first coil 314, which is set to move.

According to an embodiment, the method of operating the electronic device 301 may include moving the one of the first magnet or the first coil from the first position to a second position, which has been identified when the electronic device does not move, of the one of the first magnet or the first coil.

According to an embodiment, the method of operating the electronic device 301 may include, based on identifying the image as being obtained through the second camera 330, applying a third current to the third driving unit 342 so as to drive the third camera 340 using a pulse width modulation (PWM) driving method while the image is being displayed on the display 360.

According to an embodiment, the method of operating the electronic device 301 may include moving the third magnet 345 such that the third camera 340 moves to a third designated position.

According to an embodiment, in the method of operating the electronic device 301, the third designated position may be different from the first designated position.

According to an embodiment, in the method of operating the electronic device 301, the first designated position may include a position of one of the first magnet or the first coil 314, which is set to move, identified in the state where there is no movement of the first camera 310.

According to an embodiment, in the method of operating the electronic device 301, the third designated position may include a position of one of a third magnet or a third coil, which is set to move, where the consumption current value of the third current is minimized.

According to an embodiment, the method of operating the electronic device 301 may include performing an optical image stabilization (OIS) function of applying a first current the first driving unit 312 and applying a second current to the second driving unit 332, thereby moving the first camera 310 and the second camera 320 in a direction perpendicular to the optical axis

According to an embodiment, the method of operating the electronic device 301 may include performing an auto-focus (AF) function of applying a first current the first driving unit 312 and applying a second current to the second driving unit 332, thereby moving the first camera 310 and the second camera 320 in the optical axis direction.

According to an embodiment, a non-transitory recording medium may store instructions capable of executing an operation of displaying, through a display included in an electronic device, a preview image obtained using a second camera included in the electronic device, based on a request for execution of a camera function.

According to an embodiment, the non-transitory recording medium may store instructions capable of executing an operation of driving a first driving unit included in the electronic device using a pulse width modulation (PWM) driving method during at least a portion of a time period in which the preview image is obtained through the second camera.

According to an embodiment, the non-transitory recording medium may store instructions capable of executing an operation of driving a second driving unit included in the electronic device using a linear driving method during at least a portion of a time period in which the preview image is obtained through the second camera.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101, 301). For example, a processor (e.g., the processor 120, 320) of the machine (e.g., the electronic device 101, 301) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStoreTM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device (101; 301) comprising:
a display (160; 360);
a first camera (310) including a first lens assembly (311) and a first driving unit (312);
a second camera (330) including a second lens assembly (331) and a second driving unit (332); and
at least one processor (120; 320), and
memory (130; 350) storing instructions that, when executed by the at least one processor, cause the electronic device to:
based on a request for execution of a camera function, display, through the display, a preview image obtained using the second camera, and
drive the first driving unit using a pulse width modulation (PWM) driving method and drive the second driving unit using a linear driving method during at least a portion of a time period in which the preview image is obtained through the second camera.

2. The electronic device of claim 1,
wherein the first driving unit includes a first magnet (315) and a first coil (314), and
wherein the instructions, when executed by the at least one processor, cause the electronic device to apply a first current to the first coil to move one of the first magnet or the first coil, which is set to move, to a first designated position.

3. The electronic device of one of claims 1 to 2, wherein the instructions, when executed by the at least one processor, cause the electronic device to:
identify a plurality of positions corresponding to a movable range for the one of the first magnet or the first coil, which is set to move, and
move the one of the first magnet or the first coil to a central position among the plurality of positions.

4. The electronic device of one of claims 1 to 3, wherein the instructions, when executed by the at least one processor, cause the electronic device to:
identify a plurality of positions corresponding to a movable range for the one of the first magnet or the first coil, which is set to move, and
identify values of current consumption by the first driving unit when the one of the first magnet or the first coil moves between the plurality of positions.

5. The electronic device of one of claims 1 to 4, wherein the instructions, when executed by the at least one processor, cause the electronic device to, based on the values of current consumption, identify a position where the one of the first magnet or the first coil moves.

6. The electronic device of one of claims 1 to 5, wherein the instructions, when executed by the at least one processor, cause the electronic device to:
identify a first position where a value of current consumption among the values of current consumption is minimized, and
move the one of the first magnet or the first coil to the first position.

7. The electronic device of one of claims 1 to 6, wherein the instructions, when executed by the at least one processor, cause the electronic device to:
identify an angle between the electronic device and a ground, and
based on the angle, identify a position where the one of the first magnet or the first coil, which is set to move, moves.

8. The electronic device of one of claims 1 to 7, wherein the instructions, when executed by the at least one processor, cause the electronic device to, based on identifying a user's input for adjusting a magnification of the first camera, drive the first driving unit using the linear driving method.

9. The electronic device of one of claims 1 to 8, wherein the instructions, when executed by the at least one processor, cause the electronic device to:
based on identifying a movement of the electronic device, identify a first position of the one of the first magnet or the first coil, which is set to move, and
move the one of the first magnet or the first coil from the first position to a second position, which has been identified when the electronic device does not move, of the one of the first magnet or the first coil.

10. The electronic device of one of claims 1 to 9, wherein the instructions, when executed by the at least one processor, cause the electronic device to:
perform an optical image stabilization (OIS) function of the first camera for moving the first camera in a direction perpendicular to an optical axis, and
perform the optical image stabilization (OIS) function of the second camera for moving the second camera in the direction perpendicular to the optical axis.

11. The electronic device of one of claims 1 to 10, wherein the instructions, when executed by the at least one processor, cause the electronic device to:
perform an auto focus (AF) function of the first camera for moving the first camera in an optical axis direction, and
perform the auto focus (AF) function of the second camera for moving the second camera in the optical axis direction.

12. The electronic device of one of claims 1 to 11,
wherein a first angle of view of the first camera is different from a second angle of view of the second camera.

13. The electronic device of one of claims 1 to 12,
wherein the first camera further includes a first image sensor (316), and
wherein the instructions, when executed by the at least one processor, cause the electronic device to:obtain, through the first camera, a preview image, and
when identifying that the preview image obtained using the first camera is to be image processed through the first image sensor, drive the first driving unit using the linear driving method.

14. An operation method of an electronic device, the method comprising:
based on a request for execution of a camera function, displaying, through a display included in the electronic device, a preview image obtained using a second camera included in the electronic device, and
driving a first driving unit included in the electronic device using a pulse width modulation (PWM) driving method and drive a second driving unit included in the electronic device using a linear driving method during at least a portion of a time period in which the preview image is obtained through the second camera.

15. The operation method according to claim 14, further comprising:
wherein the first driving unit includes a first magnet (315) and a first coil (314), and
applying a first current to a first coil included in the electronic device to move one of a first magnet included in the electronic device or the first coil, which is set to move, to a first designated position.
